(19) Europäisches Patentamt
European Patent Office
Office européen des brevets

(11) **EP 2 239 477 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(51) Int Cl.:
*F16D 3/224* *(2011.01)*  *F16D 3/223* *(2011.01)*

(21) Anmeldenummer: **10171417.8**

(22) Anmeldetag: **02.11.2004**

(54) **Gegenbahngelenk mit Bahnwendepunkt**

Counter track joint with track point of inflexion

Joint à chemins de roulements conjugués présentant un point d'inflexion de chemin de roulement

(84) Benannte Vertragsstaaten:
**AT BE BG CH CY CZ DE DK EE ES FI FR GB GR HU IE IS IT LI LU MC NL PL PT RO SE SI SK TR**

(43) Veröffentlichungstag der Anmeldung:
**13.10.2010 Patentblatt 2010/41**

(62) Dokumentnummer(n) der früheren Anmeldung(en) nach Art. 76 EPÜ:
**04822186.5 / 1 807 634**

(73) Patentinhaber: **GKN Driveline International GmbH**
**53797 Lohmar (DE)**

(72) Erfinder: **Weckerling, Thomas**
**53757 St. Augustin (DE)**

(74) Vertreter: **Oberwalleney, Stephan et al**
**Neumann Müller Oberwalleney & Partner**
**Patentanwälte**
**Overstolzenstrasse 2a**
**50677 Köln (DE)**

(56) Entgegenhaltungen:
**EP-A- 0 794 346     DE-A1- 10 304 156**
**DE-A1- 10 337 612     US-A- 3 982 840**
**US-B1- 6 383 082**

**Beschreibung**

Die Erfindung betrifft ein Gegenbahngelenk als Festgelenk mit den Merkmalen ein Gelenkaußenteil, welches eine erste Längsachse und axial zueinander entgegengesetzt eine Anschlußseite und eine Öffnungsseite hat, und das erste äußere Kugelbahnen und zweite äußere Kugelbahnen aufweist; ein Gelenkinnenteil, welches eine zweite Längsachse und Anschlußmittel für eine zur Öffnungsseite des Gelenkaußenteils weisende Welle hat und das erste innere Kugelbahnen und zweite innere Kugelbahnen aufweist; die ersten äußeren Kugelbahnen und die ersten inneren Kugelbahnen bilden erste Bahnpaare miteinander; die zweiten äußeren Kugelbahnen und die zweiten inneren Kugelbahnen bilden zweite Bahnpaare miteinander, die Bahnpaare nehmen jeweils eine drehmomentübertragende Kugel auf; ein Kugelkäfig sitzt zwischen Gelenkaußenteil und Gelenkinnenteil und weist umfangsverteilte Käfigfenster auf, die jeweils zumindest eine der Kugeln aufnehmen; der Öffnungswinkel der ersten Bahnpaare öffnet sich bei gestrecktem Gelenk in der Gelenkmittelebene von der Öffnungsseite zur Anschlußseite des Gelenkaußenteils; der Öffnungswinkel der zweiten Bahnpaare öffnet sich bei gestrecktem Gelenk in der Gelenkmittelebene von der Anschlußseite zur Öffnungsseite des Gelenkaußenteils.

Gegenbahngelenke der vorstehend genannten Art sind grundsätzlich aus der DE 102 20 711 A1 bekannt, wobei Gelenke mit 6 Kugeln und mit 8 Kugeln gezeigt sind. Hierbei entspricht der Typ der Kugelbahnen dem an sich aus Rzeppa-Gelenken (RF-Gelenken) sowie aus Undercut Free-Gelenken (UF-Gelenken) bekannten Typ. Das heißt, die Mittellinien der Kugelbahnen bestehen aus einheitlichen Radien (RF-Gelenk) bzw. setzen sich aus Radien und anschließenden achsparallelen Geraden (UF-Gelenk) zusammen. Bei den beschriebenen Gegenbahngelenken wechselt sich hierbei die axiale Öffnungsrichtung der Bahnpaare über dem Umfang ab, was zum Typ des Gegenbahngelenks führt. Gegenbahngelenke dieser Art haben den Nachteil, daß der Beugewinkel auf etwa 45° beschränkt ist, weil bei Überschreiten dieses Beugewinkels eine erste Kugel in der Gelenkbeugeebene aus den ersten Bahnpaaren austritt.

Aus der DE 103 37 612 A1 sind Gegenbahngelenke bekannt, bei denen die Bahnmittellinien der ersten Bahnpaare, die einen Öffnungswinkel haben, dessen Öffnungsrichtung bei gestrecktem Gelenk zum Gelenkboden hin weist, so gestaltet sind, daß der Öffnungswinkel bei Beugung des Gelenks ab einem bestimmten Beugewinkel eine Umkehr seiner Öffnungsrichtung erfährt. Dies wird insbesondere dadurch verwirklicht, daß die Mittellinien der Kugelbahnen der ersten Bahnpaare S-förmig sind und somit jeweils einen Wendepunkt aufweisen.

Aus der DE 100 60 220 A1 sind unter anderem Gegenbahngelenke bekannt, bei denen die Mittellinien der ersten äußeren Kugelbahnen nahe der Gelenköffnung einen Wendepunkt aufweisen, so daß die Mittellinien der ersten äußeren Kugelbahnen S-förmig sind. Entsprechendes gilt aufgrund der Symmetriebedingung für die Mittellinien der ersten inneren Kugelbahnen des Gelenkinnenteils. Der Beugewinkel dieser Gegenbahngelenke kann auf diese Weise erhöht werden.

Für Gelenke der beiden zuletzt genannten Arten gilt, daß das grundlegende Prinzip von Gegenbahngelenken, nämlich abwechselnd entgegengesetzt gerichtete Bahnöffnungswinkel und damit abwechselnd entgegengesetzte Axialkräfte von den Kugeln auf den Kugelkäfig nur solange gilt, bis eine Kugel den Wendepunkt vom nach innen gekrümmten Bahnbereich zum nach außen weggekrümmten Bahnbereich erreicht. Ist der Beugewinkel erreicht, bei dem die Kugel diesen zweiten Bahnbereich der jeweiligen S-förmigen Bahnen einnimmt, sind die Bahnöffnungswinkel nicht mehr sämtlich über dem Umfang abwechselnd gerichtet und die Axialkräfte von den Kugeln auf den Kugelkäfig nicht mehr axial ausgeglichen. Das Gegenbahnprinzip ist somit nicht mehr gegeben und der Kugelkäfig muß sich axial am Gelenkaußenteil und/oder der Kugelnabe abstützen. Dies kann zu einer reduzierten Lebensdauer aufgrund der erhöhten inneren Reibung zwischen Kugelkäfig und Gelenkaußenteil bzw. Gelenkinnenteil führen.

Hiervon ausgehend ist es die Aufgabe der vorliegenden Erfindung, ausgehend vom eingangs genannten Stand der Technik, ein Festgelenk nach Art eines Gegenbahngelenks zu entwickeln, das vergrößerte maximale Beugewinkel darstellen kann und dabei eine erhöhte Lebensdauer aufweist.

Die Lösung hierfür besteht in einem Gelenk mit den Merkmalen ein Gelenkaußenteil, welches eine erste Längsachse und axial zueinander entgegengesetzt eine Anschlußseite und eine Öffnungsseite hat und das erste äußere Kugelbahnen und zweite äußere Kugelbahnen aufweist; ein Gelenkinnenteil, welches eine zweite Längsachse und Anschlußmittel für eine zur Öffnungsseite des Gelenkaußenteils weisende Welle hat und das erste innere Kugelbahnen und zweite innere Kugelbahnen aufweist; die ersten äußeren Kugelbahnen und die ersten inneren Kugelbahnen bilden erste Bahnpaare miteinander; die zweiten äußeren Kugelbahnen und die zweiten inneren Kugelbahnen bilden zweite Bahnpaare miteinander, die Bahnpaare nehmen jeweils eine drehmomentübertragende Kugel auf; ein Kugelkäfig sitzt zwischen Gelenkaußenteil und Gelenkinnenteil und weist umfangsverteilte Käfigfenster auf, die jeweils zumindest eine der Kugeln aufnehmen; der Öffnungswinkel der ersten Bahnpaare öffnet sich bei gestrecktem Gelenk in der Gelenkmittelebene von der Öffnungsseite zur Anschlußseite des Gelenkaußenteils; der Öffnungswinkel der zweiten Bahnpaare öffnet sich bei gestrecktem Gelenk in der Gelenkmittelebene von der Anschlußseite zur Öffnungsseite des Gelenkaußenteils, wobei die Mittellinien der ersten Bahnpaare jeweils einen Wendepunkt $T_{1-2}$ haben und der Mittelpunktswinkel $\beta$ an den Wendepunkt $T_{1-2}$ bezogen auf die Gelenkmittelebene E jeweils größer ist als 4°, wobei die Bahnmittellinien der ersten Bahnpaare von der Gelenkmittelebene E bis zum Wendepunkt $T_{1-2}$ einen Radius $R_2$ mit einem Mittelpunkt

$M_2$ aufweisen, der gegenüber dem Gelenkmittelpunkt M um einen axialen Offset $O_2$ und einen radialen Offset a, b versetzt ist.

Hiermit ist sichergestellt, daß das Gelenk im Lebensdauerbetrieb als Gegenbahngelenk arbeitet. Als Lebensdauerbetrieb gilt ein solcher innerhalb des Lebensdauerwinkels, bei welchem die Auslegungslebensdauer des Gelenks unter wechselnder Last schadensfrei erreicht wird.

Dies bedeutet, daß im sogenannten Lebensdauerbereich das Prinzip des Gegenbahngelenks nicht verlassen wird, so daß die Lebensdauer erhöht wird. Der Lebensdauerbereich ist hierbei über den Lebensdauerwinkel $\beta_L$ definiert. Bei einem Betrieb innerhalb dieses Beugungswinkels erreicht das Gelenk definitionsgemäß die Auslegungslebensdauer. Gleichzeitig ist jedoch die weitere Gelenkbeugung möglich, so daß größere Beugewinkel darstellbar sind. Erfindungsgemäß ist nun der Übergang zum zweiten Bereich so definiert, daß er außerhalb des Bahnbereichs liegt, der von den Kugeln im Lebensdauerbereich in den Kugelbahnen überstrichen wird. Für die Lage des genannten Wendepunkts werden nachstehend bevorzugte Ausführungsbeispiele angegeben. Es ist hierbei darauf abzuheben, wie der Begriff Wendepunkt verwendet wird: zum einen im mathematisch zutreffenden Sinn eines Übergangs von einer Krümmung in eine Gegenkrümmung und zum anderen in mathematisch nicht exaktem Sinn für den Übergang von einer Krümmung in eine an die Krümmung tangential anschließende Gerade. Beides wird unter dem hier verwendeten Begriff "Wendepunkt" verstanden. Es wäre auch die Verwendung des Begriffs "Tangentenpunkt" möglich.

Die Bahnmittellinien der ersten Bahnpaare weisen von der Gelenkmittelebene E bis zum Wendepunkt $T_{1-2}$ einen Radius $R_2$ mit einem Mittelpunkt $M_2$ auf, der gegenüber dem Gelenkmittelpunkt M um einen axialen Offset $O_2$ und einen radialen Offset a, b versetzt ist. Dabei kann der Mittelpunkt $M_2$ von der jeweiligen Längsachse $A_{12}$, $A_{22}$ in Richtung zum Wendepunkt $T_{1-2}$ oder vom Wendepunkt $T_{1-2}$ weg versetzt angeordnet sein.

Nach einer ersten bevorzugten Ausführungsform ist vorgesehen, daß der Mittelpunktswinkel $\beta$ an den Wendepunkt $T_{1-2}$ bezogen auf die Gelenkmittelebene E jeweils größer als 5° ist. Nach einer ergänzenden bevorzugten Ausführungsform ist vorgesehen, daß der Mittelpunktswinkel $\beta$ an den Wendepunkt $T_{1-2}$ bezogen auf die Gelenkmittelebene E jeweils kleiner als 12° ist.

Weiterhin ist insbesondere vorgesehen, daß eine Tangente an die Bahnmittellinie der ersten Bahnpaare im Wendepunkt $T_{1-2}$ mit der jeweiligen Längsachse bzw. eine Senkrechte auf dieser Tangente mit der Gelenkmittelebene E einen Wendepunktwinkel $\alpha$ bildet, der jeweils größer oder gleich 10° ist und der jeweils kleiner oder gleich 23° ist, das heißt $10° \leq \alpha \leq 17°$. Der Wendepunktwinkel $\alpha$ ist mit

$$\alpha \geq \beta + \arcsin\left[\frac{O_2}{R_2} \cdot \sin(\beta + 90°)\right]$$

definiert, wobei $O_2$ der axiale Abstand des Schnittpunkts einer Senkrechten auf der Tangente $T_{1-2}$ mit der Längsmittelachse A von der Gelenkmittelebene E, und $R_2$ der Abstand dieses Schnittpunktes vom Wendepunkt $T_{1-2}$ darstellt.

Nach einer weiteren ersten speziellen Ausführung ist vorgesehen, daß der Wendepunktwinkel $\alpha$ mit

$$\alpha \geq \beta + \arcsin\left[\frac{O_2 + a \cdot \tan(\beta)}{R_2} \cdot \sin(\beta + 90°)\right]$$

definiert ist, wenn die jeweiligen Bahnmittellinien in der Gelenkmittelebene E und bis zum Wendepunkt $T_{1-2}$ einen Radius $R_2$ aufweist, dessen Mittelpunkt $M_2$ von der Gelenkmittelebene E den axialen Abstand $O_2$ und von der jeweiligen Längsachse den radialen Abstand a in Richtung zum Wendepunkt $T_{1-2}$ hat.

Eine hierzu alternative spezielle Ausführung besteht darin, daß der Wendepunktwinkel $\alpha$ mit

$$\alpha \geq \beta + \arcsin\left[\frac{O_2 - b \cdot \tan(\beta)}{R_2} \cdot \sin(\beta + 90°)\right]$$

EP 2 239 477 B1

definiert ist, wenn die jeweiligen Bahnmittellinie in der Gelenkmittelebene E und bis zum Wendepunkt $T_{1-2}$ einen Radius $R_2$ aufweist, dessen Mittelpunkt $M_2$ von der Gelenkmittelebene E den axialen Abstand $O_2$ und von der jeweiligen Längsachse A den radialen Abstand b in Richtung vom Wendepunkt $T_{1-2}$ weg hat.

Das erfindungsgemäße Gegenbahngelenk kann ein 6-Kugel-Gelenk oder ein 8-Kugel-Gelenk sein. Vorzugsweise sind die Käfigfenster für die ersten Kugeln in Umfangsrichtung kürzer sind als Käfigfenster für die zweiten Kugeln.

Ein erfindungsgemäßes Gegenbahngelenk mit 8 Kugeln für einen Beugewinkel von 47 - 52° ist dann optimiert, wenn folgende Verhältnisse zwischen einzelnen Bemessungsgrößen eingehalten werden:

$$1{,}5 \; < PCDB / R1 \; < 1{,}9$$

$$1{,}8 \; < PCDB / R2 \; < 2{,}2$$

$$2{,}3 \; < PCDB / R3 \; < 2{,}7$$

$$2{,}1 \; < PCDB / R4 \; < 2{,}5$$

$$1{,}8 \; < PCDB / R5 \; < 2{,}2$$

$$12 \; < PCDB / O2 \; < 16$$

$$12 \; < PCDB / O5 \; < 16$$

$$0{,}6 \; < PCDB / OD \; < 0{,}8$$

$$2{,}1 \; < PCDB / L \; < 2{,}5$$

$$3{,}4 \; < PCDB / DB \; < 4{,}0$$

$$2{,}1 \; < PCDB / DS \; < 2{,}5$$

$$0{,}75 < PCDB / DCA < 1{,}05$$

$$0{,}85 < PCDB / DCI \; < 1{,}15$$

$$7{,}5 \; < PCDB / W \; < 11{,}5$$

$$2{,}8 \; < PCDB / L1 \; < 3{,}4$$

4

$$2,6 < PCDB / L2 < 3,2$$

In diesen Verhältnissen haben die benannten Größen die folgende Bedeutung:

PCDB: Teilkreisdurchmesser Kugeln
R1 : Außenteil Kugelbahnradius 1 (erste Kugelbahnen)
R2 : Außenteil Kugelbahnradius 2 (erste Kugelbahnen)
R3 : Außenteil Kugelbahnradius 3 (erste Kugelbahnen)
R4 : Außenteil Kugelbahnradius 4 (zweite Kugelbahnen)
R5 : Außenteil Kugelbahnradius 5 (zweite Kugelbahnen)
O2 : Außenteil Kugelbahnoffset für Bahn mit Öffnungswinkel zur Anschlußseite
O5 : Außenteil Kugelbahnoffset für Bahn mit Öffnungswinkel zur Öffnungsseite
OD : Außendurchmesser Außenteil
L : Länge Innenteil
DB : Kugeldurchmesser
PCDS: Teilkreisdurchmesser Wellenverzahnung
DCA: Käfig Außendurchmesser
DCI : Käfig Innendurchmesser
W : Käfig Stegbreite
L1 : Käfig Fensterlänge 1
L2 : Käfig Fensterlänge 2

Die Lösung der obengenannten Aufgabe besteht weiter in einer Gelenkwelle umfassend zwei Gleichlaufgelenke und eine Zwischenwelle, wobei zumindest eines der Gleichlaufgelenke gemäß einer der obengenannten Ausführungsformen ausgebildet ist. Dabei kann die Zwischenwelle eine Axialverschiebeeinheit umfassen.
Die Gelenkwelle kann in einem Kraftfahrzeug verwendet werden, und zwar insbesondere in einem Kraftfahrzeug mit zumindest zwei Gelenkwellen, die jeweils zwei Gleichlaufgelenke und eine Zwischenwelle umfassen und die jeweils als Seitenwellen ein Differentialgetriebe mit einer Radnabeneinheit verbinden, wobei jeweils zumindest eines der Gelenke jeder Gelenkwelle nach einer der obengenannten Ausführungsformen ausgebildet ist und sein Wellenzapfen in das Differentialgetriebe eingesteckt ist. Alternativ kann die Gelenkwelle in einem Kraftfahrzeug mit zumindest zwei Gelenkwellen verwendet werden, die jeweils zwei Gleichlaufgelenke und eine Zwischenwelle umfassen und die jeweils als Seitenwellen ein Differentialgetriebe mit einer Radnabeneinheit verbinden, wobei jeweils zumindest eines der Gelenke jeder Gelenkwelle nach einer der obengenannten Ausführungsformen ausgebildet ist und sein Gelenkzapfen in die Radnabeneinheit eingesteckt ist.
Bevorzugte Ausführungsbeispiele der Erfindung sind in den Zeichnungen dargestellt und werden nachstehend beschrieben.

Figur 1 zeigt ein nicht erfindungsgemäßes Gegenbahngelenk mit 6 Kugeln in einer ersten Ausführung

a) in Gesamtdarstellung im Längsschnitt
b) mit seinem Gelenkaußenteil als Einzelheit im Längsschnitt;

Figur 2 zeigt ein Gegenbahngelenk mit 6 Kugeln nach Figur 1

a) im Längsschnitt mit Vermaßungen
b) im Längsschnitt weiteren Vermaßungen
c) den Kugelkäfig in Abwicklung als Einzelheit;

Figur 3 zeigt ein Gegenbahngelenk mit 8 Kugeln ähnlich den Figuren 1 und 2

a) mit Vermaßungen im Längsschnitt
b) in abgewinkelter Position mit weiteren Vermaßungen
c) den Kugelkäfig in Abwicklung als Einzelheit;

Figur 4 zeigt ein nicht erfindungsgemäßes Gelenk mit 6 Kugeln in einer zweiten Ausführung

a) in Gesamtdarstellung im Längsschnitt
b) das Gelenkaußenteil als Einzelheit im Längsschnitt
c) das Gelenkinnenteil als Einzelheit im Längsschnitt;

Figur 5 zeigt das Gelenkaußenteil eines nicht erfindungsgemäßen Gelenks nach Figur 4 mit weiteren Vermaßungen im Längsschnitt;

Figur 6 zeigt das nicht erfindungsgemäße Gelenk nach den Figuren 4 und 5 mit weiteren Vermaßungen

a) im Längsschnitt durch das Gelenkaußenteil
b) im Querschnitt durch eine Kugelbahn
c) eine Bewertungstabelle;

Figur 7 zeigt das Gelenkaußenteil eines erfindungsgemäßen Gelenks in einer ersten Ausführungsform im Längsschnitt mit Vermaßungen;

Figur 8 zeigt das Gelenkaußenteil eines erfindungsgemäßen Gelenks in einer weiteren Ausführungsform im Längsschnitt mit Vermaßungen;

Figur 9 zeigt ein nicht erfindungsgemäßes 6-Kugel-Gegenbahngelenk mit Definition der Gegenbahnen

a) in axialer Ansicht
b) im Längsschnitt;

Figur 10 zeigt ein nicht erfindungsgemäßes 6-Kugel-Gegenbahngelenk mit Definition der Gegenbahnen

a) in axialer Ansicht
b) im Längsschnitt;

Figur 11 zeigt ein nicht erfindungsgemäßes 6-Kugel-Gegenbahngelenk mit Definition der Gegenbahnen

a) in axialer Ansicht
b) im Längsschnitt;

Figur 12 zeigt ein nicht erfindungsgemäßes 6-Kugel-Gegenbahngelenk mit Definition der Bahnen

a) in axialer Ansicht
b) im Längsschnitt durch das Gelenk (RF-Bahn);

Figur 13 zeigt ein nicht erfindungsgemäßes 8-Kugel-Gegenbahngelenk mit Definition der Gegenbahnen

a) in axialer Ansicht
b) in einem ersten Längsschnitt
c) in einem zweiten Längsschnitt;

Figur 14 zeigt ein nicht erfindungsgemäßes 8-Kugel-Gegenbahngelenk

a) in axialer Ansicht
b) in einem ersten Längsschnitt
c) in einem zweiten Längsschnitt;

Figur 15 zeigt ein nicht erfindungsgemäßes 8-Kugel-Gegenbahngelenk

a) in axialer Ansicht
b) in einem ersten Längsschnitt
c) in einem zweiten Längsschnitt;

Figur 16 zeigt ein nicht erfindungsgemäßes 8-Kugel-Gegenbahngelenk

a) in axialer Ansicht
b) in einem ersten Längsschnitt
c) in einem zweiten Längsschnitt;

Figur 17 zeigt ein nicht erfindungsgemäßes 6-Kugel-Gegenbahngelenk mit Definition der Bahnen und in weiteren Einzelheiten

a) das Gelenkaußenteil im Längsschnitt
b) eine Außenbahn im Längsschnitt
c) das Gelenkinnenteil im Längsschnitt
d) eine Innenbahn im Längsschnitt
e) eine Bewertungstabelle.

Figur 18 zeigt ein nicht erfindungsgemäßes 8-Kugel-Gegenbahngelenk ähnlich Figur 13 mit Definition einzelner Kenngrößen

a) in axialer Ansicht
b) in einem ersten Längsschnitt
c) in einem zweiten Längsschnitt
d) im Querschnitt durch den Kugelkäfig;

Figur 19 zeigt ein nicht erfindungsgemäßes 8-Kugel-Gegenbahngelenk ähnlich Figur 13 mit Definition der Bahnen

a) in axialer Ansicht
b) im Längsschnitt durch das Gelenkaußenteil
c) im Längsschnitt durch den Kugelkäfig;

Figur 20 zeigt eine erfindungsgemäße Einbausituation einer erfindungsgemäßen Gelenkwelle in einem Fahrzeug im Teillängsschnitt.

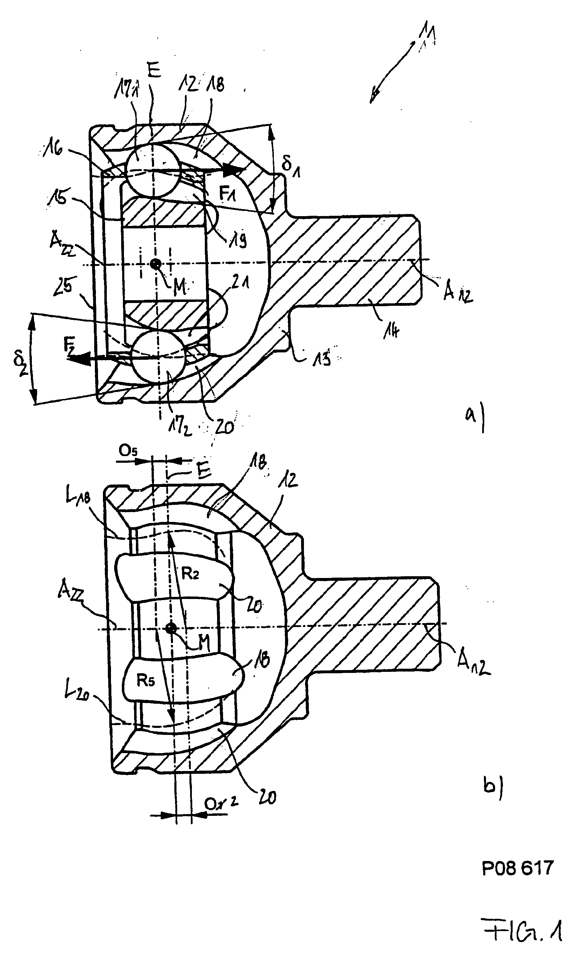

Die beiden Darstellungen der Figur 1 werden nachstehend gemeinsam beschrieben. Ein Gleichlaufgelenk 11 umfaßt ein Gelenkaußenteil 12 mit einer Öffnung 25 mit einem geschlossenen Boden 13 und einem einstückig angeschlossenen Zapfen 14. Das Gelenk umfaßt weiterhin ein Gelenkinnenteil 15, einen Kugelkäfig 16 sowie drehmomentübertragende Kugeln 17. Erste äußere Kugelbahnen 18 und erste innere Kugelbahnen 19 nehmen Kugeln $17_1$ auf und bilden erste Bahnpaare miteinander. Zweite äußere Kugelbahnen 20 und zweite innere Kugelbahnen 21 bilden zweite Bahnpaare miteinander, die zweite Kugeln $17_2$ aufnehmen. Die beiden Arten von Bahnpaaren sind über dem Umfang abwechselnd ausgebildet. Tangenten an die Kugeln in den Berührungspunkten mit den ersten Bahnpaaren, die eingezeichnet sind, bilden miteinander einen Öffnungswinkel $\delta_1$, der sich in Richtung zum Boden 13 öffnet. Tangenten an die zweiten Kugeln $17_2$ in den Berührungspunkten mit den zweiten Bahnpaaren bilden miteinander einen Öffnungswinkel $\delta_2$, der sich zur Öffnung 21 des Gelenkaußenteils öffnet. Unter Drehmoment erzeugen diese Öffnungswinkel bei gestrecktem Gelenk Axialkräfte auf die Kugeln und damit auf den Kugelkäfig 16, die mit $F_1$ und $F_2$ bezeichnet sind. Eine Gelenkmittelebene E, die die Mittelpunkte der Kugeln aufnimmt, schneidet die Längsachse des Gelenks, die durch die Längsachsen $A_{12}$ des Gelenkaußenteils und $A_{22}$ des Gelenkinnenteils definiert ist, in einem Gelenkmittelpunkt M. Jeweils auf die Mittellinien $L_{18}$ der Kugelbahnen 18 im Gelenkaußenteil 12 bezogen, haben die Bahnen 18 in der Mittelebene einen Radius $R_2$, dessen Mittelpunkt um einen axialen Offset $O_2$ auf der Achse A gegenüber dem Gelenkmittelpunkt M versetzt ist, während die Bahnen 20 einen gleich großen Radius $R_5$ haben, dessen Mittelpunkt um ein Offset $O_5$ in entgegengesetzter Richtung gegenüber dem Gelenkmittelpunkt M versetzt ist.

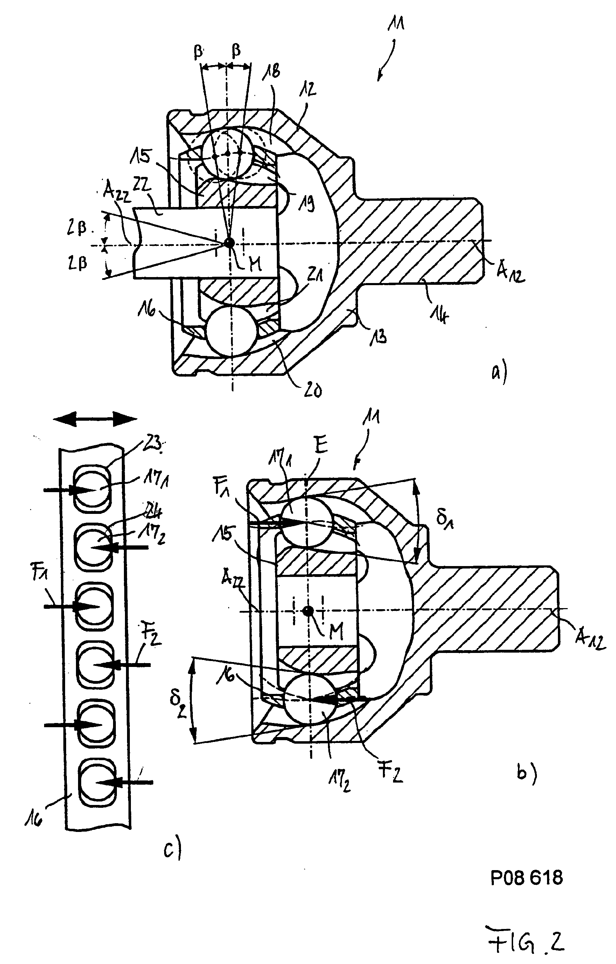

In Figur 2 sind gleiche Einzelheiten wie in Figur 1 mit gleichen Bezugsziffern versehen. In das Gelenkinnenteil 15 ist in Darstellung a eine Welle 22 eingesteckt. Außer der Längsachse $A_{12}$ des Gelenkaußenteils ist die Längsachse $A_{22}$ der Welle 22 bezeichnet, die in gleicher Weise der Längsachse des Gelenkinnenteils 15 entspricht. In Bezug auf die Längsachse $A_{22}$ sind nach beiden Seiten Lebensdauerwinkel 2β angetragen, die den maximalen Beugewinkel bezeichnen, unter dem das Gelenk schadensfrei im Lebensdauerversuch gefahren werden kann. Als Lebensdauerversuch ist hierbei ein Lastkollektiv zu verstehen, das dem praktischen Einsatz eines Gelenks während der Auslegungslebensdauer entspricht. Bei Beugung der Welle 22 gegenüber dem Gelenkaußenteil 12 in dem Winkel 2β zu beiden Seiten machen die Kugeln $17_1$ in den erfindungsgemäßen Kugelbahnen 18, 19 Bewegungen längs der Bahnmittellinie, die durch die Winkel β zu beiden Seiten von der Gelenkmittelebene E aus definiert sind, wobei die Schenkel der Winkel von der Gelenkmittelebene E und Strahlen durch die Kugelmittelpunkte gebildet werden. In Darstellung c) ist der Kugelkäfig 16 in Abwicklung mit je drei umfangsverteilten Käfigfenstern 23, 24 erkennbar. Jeweils in ersten Bahnpaaren

gehaltene Kugeln $17_1$ üben eine Axialkraft $F_1$ auf den Kugelkäfig aus; jeweils in zweiten Bahnpaaren gehaltene Kugeln $17_2$ üben eine Axialkraft $F_2$ auf den Kugelkäfig aus. Aufgrund der abwechselnden Verteilung von ersten und zweiten Bahnpaaren befindet sich der Kugelkäfig auch bei Drehmomentübertragung über das Gelenk in axialem Gleichgewicht.

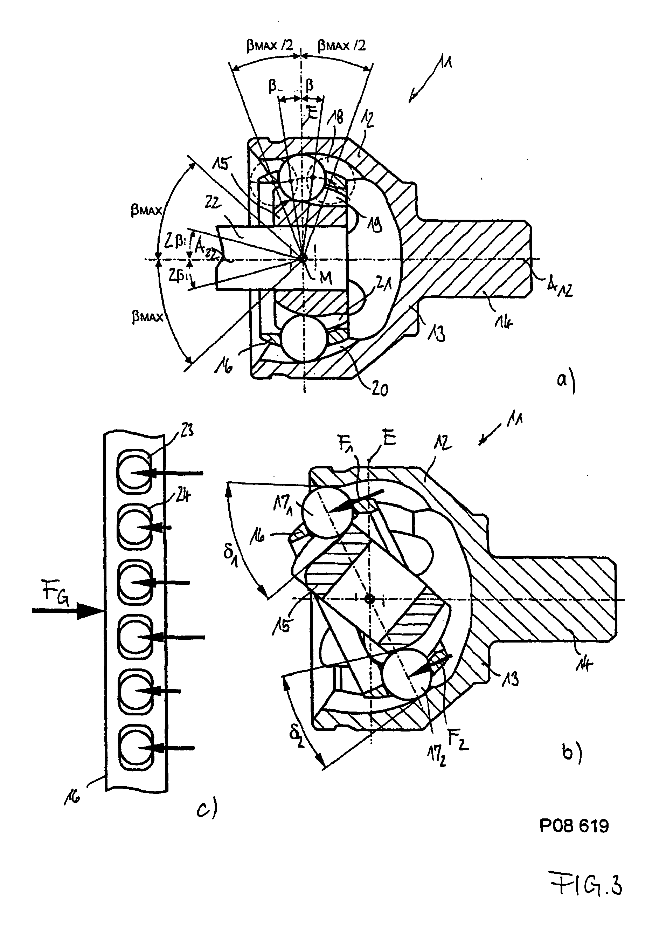

In Figur 3 ist in Darstellung a) in Bezug auf die Längsachse $A_{22}$ der Welle 22 zusätzlich zu dem Lebensdauerwinkel $2\beta$ beidseitig der maximale Beugewinkel $\beta_{max}$ angetragen. In Übereinstimmung hierzu sind in Bezug auf die Kugelmittenposition im Verhältnis zum Gelenkaußenteil wiederum die halben Lebensdauerwinkel $\beta$ wie auch die halben maximalen Beugewinkel $\beta_{max/2}$ zu beiden Seiten von der Mittelebene E aus angetragen. Die Kugelpositionen im Gelenkaußenteil bei maximalem Beugewinkel $\beta_{max}$ sind jeweils mit gestrichelten Linien dargestellt.

In Darstellung b) ist der maximale Beugewinkel am Gelenk in einem Sinne eingetragen, in dem die Kugeln $17_1$ in den erfindungsgemäßen Bahnpaaren 18, 19 zur Öffnung 21 des Gelenkaußenteils 12 hin wandern. Aufgrund des S-förmigen Verlaufs der erfindungsgemäßen Kugelbahnen 18, 19 hat sich hierbei der Öffnungswinkel $\delta_1$ zwischen den Tangenten an die Kugeln $17_1$ in den ersten Bahnpaaren im Richtungssinn umgekehrt und öffnet sich hier ebenfalls zur Öffnungsseite 21 des Gelenkaußenteils 12 hin, während die zweiten Bahnpaare, die mit Bahnen 20, 21 nach Art eines Rzeppa-Gelenks ausgeführt sind, einen Öffnungswinkel $\delta_2$ bilden, der sich zwar dem Betrag nach verändert hat, jedoch wie in der gestreckten Gelenkposition nach Figur 2 weiterhin in Richtung zur Öffnungsseite 21 des Gelenkaußenteils geöffnet sind. Entsprechend den Öffnungswinkeln $\delta_1$, $\delta_2$, ergeben sich die Richtungen der Kräfte $F_1$, $F_2$ auf die Kugeln in der Schnittebene, wie in Darstellung d) erkennbar ist, sind sämtliche Kugelkräfte in ihrer Wirkung übereinstimmend bezüglich ihrer Richtung, wenn auch nicht dem Betrage nach, so daß vom Gelenkaußenteil aus eine Gegenkraft $F_G$ zu der Summe der Kugelkräfte auf den Käfig ausgeübt werden muß. Erfindungsgemäß wird eine solche Gegenkraft $F_G$ nur bei Überschreiten des Lebensdauerwinkels $2\beta$ auftreten, während innerhalb des Lebensdauerwinkels $2\beta$ der Käfig im axialen Gleichgewicht bleibt.

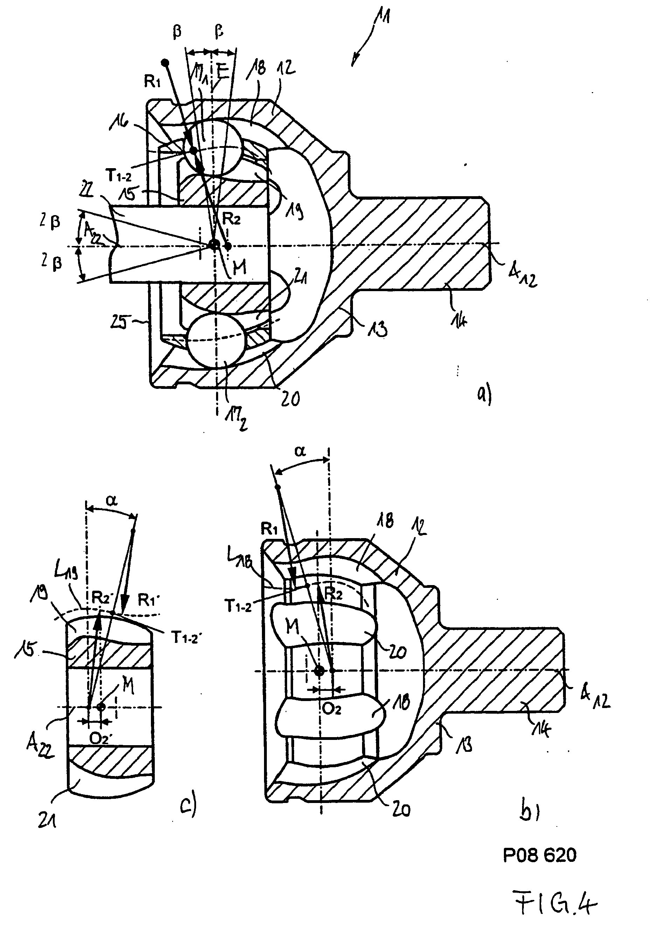

In Figur 4 ist ein möglicher Bahnverlauf der Bahnmittellinien $L_{18}$, $L_{19}$ des Gelenkaußenteils und des Gelenkinnenteils für die Kugelbahnen 18, 19 gemäß einem ersten Ausführungsbeispiel näher dargestellt. Die erfindungsgemäßen S-förmig verlaufenden Kugelbahnen, in ihrem Verlauf repräsentiert durch Bahnmittellinien $L_{18}$, $L_{19}$, verlaufen jeweils S-förmig, wobei die Position des Wendepunktes $T_{1-2}$ eingezeichnet ist, die, ausgehend von einem Radius $R_2$ (Gelenkaußenteil) bzw. $R_{2'}$ (Gelenkinnenteil), der um einen Offsetpunkt $O_2$ bzw. $O_{2'}$ geschlagen ist, unter einem Winkel von $\alpha$ zu einer Radialebene, d.h. einer parallelen Ebene zur Gelenkmittelebene E liegt. Über den Wendepunkt $T_{1-2}$ hinaus setzt sich die Bahnmittellinie in einem Radius $R_1$ (Gelenkaußenteil) bzw. $R_{1'}$ (Gelenkinnenteil) fort, dessen Mittelpunktslage hier nicht näher bemaßt ist, jedoch durch den Schenkel des Winkels $\alpha$ sowie den Radius $R_1$ bzw. $R_{1'}$ selber definiert ist. Gemäß der Erfindung liegt der Wendepunkt $T_{1-2}$ ebenso wie der Wendepunkt $T_{1-2'}$ außerhalb des Winkelsektors der Winkel $\beta_{L/2}$ zu jeder Seite von der Gelenkmittelebene E aus betrachtet. Da die Richtungsumkehr des Winkels $\delta_1$ bei Überschreiten des Wendepunktes $T_{1-2}$ in den ersten Bahnpaaren erfolgt, wird durch die Bedingung, die hier bezeichnet ist, sichergestellt, daß im Lebensdauerbereich (Beugung von $A_{22}$ zu $A_{12}$ <= $2\beta$ nach beiden Seiten) keine Axialkräfte am Käfig auftreten, sondern der Käfig axialkraftfrei im Gelenkaußenteil gehalten ist.

Während der Lebensdauerwinkel $2\beta$ jeweils ein Mittelpunktswinkel bezogen auf den Gelenkmittelpunkt M ist, und zwar ausgehend von der Längsachse $A_{12}$ bzw. der Mittelebene E und auf diese Weise eine Kugelposition auf der Bahnmittellinie $L_{18}$, $L_{19}$ beschreibt, ist der Mittelpunkt des Winkels $\alpha$ an die Tangente an die Bahnmittellinie im Wendepunkt $T_{1-2}$ jeweils mit einem Offset $O_2$, $O_{2'}$ zum Gelenkmittelpunkt M behaftet.

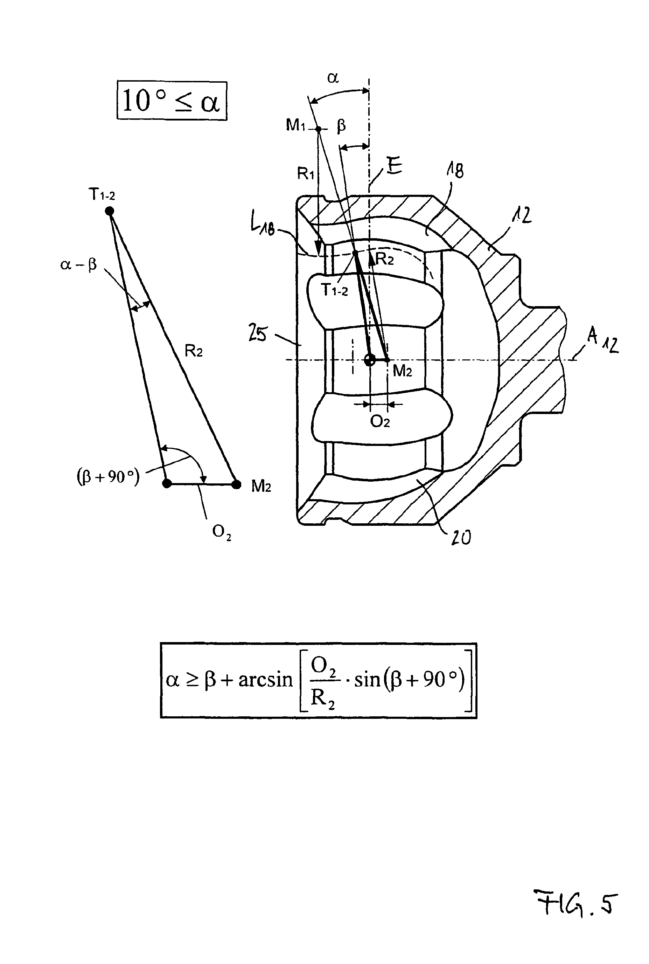

In Figur 5 ist die Beziehung zwischen Lebensdauerwinkel $\beta$ bezogen auf den Weg der Kugel längs der Bahnmittellinie $L_{18}$ im Gelenkaußenteil 12 im Verhältnis zum Wendepunktwinkel $\alpha$ dargestellt. Es gilt die Bedingung

$$\alpha \geq \beta + \arcsin\left[\frac{O_2}{R_2} \cdot \sin(\beta + 90°)\right]$$

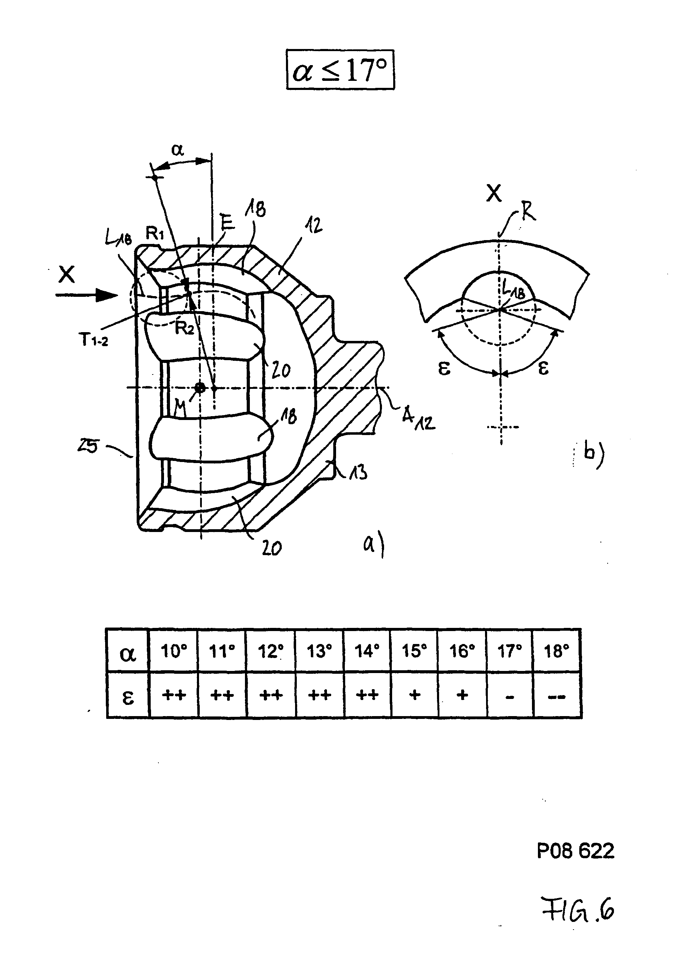

In Figur 6 ist für ein Gelenkaußenteil 12 nach Figur 5 der Einfluß des Wendepunktwinkels $\alpha$ auf den Bahnumschlingungswinkel $\varepsilon$ im Gelenkaußenteil dargestellt. Hierbei ist der Bahnumschlingungswinkel $\varepsilon$ jeweils als Winkel zwischen einer Radialebene R und einem Strahl durch den Kugelmittelpunkt bzw. die Bahnmittellinie $L_{18}$ an eine Bahnkante definiert. Wenn der Bahnumschlingungswinkel $\varepsilon$ klein wird, entstehen ungünstige Kantenbelastungen in den Bahnen 18, die zu Schäden führen können. Hiermit wird die Drehmomentkapazität begrenzt. Bis zu einem Wendepunktwinkel $\alpha$ von 16° ist der Bahnumschlingungswinkel $\varepsilon$ noch zufriedenstellend groß.

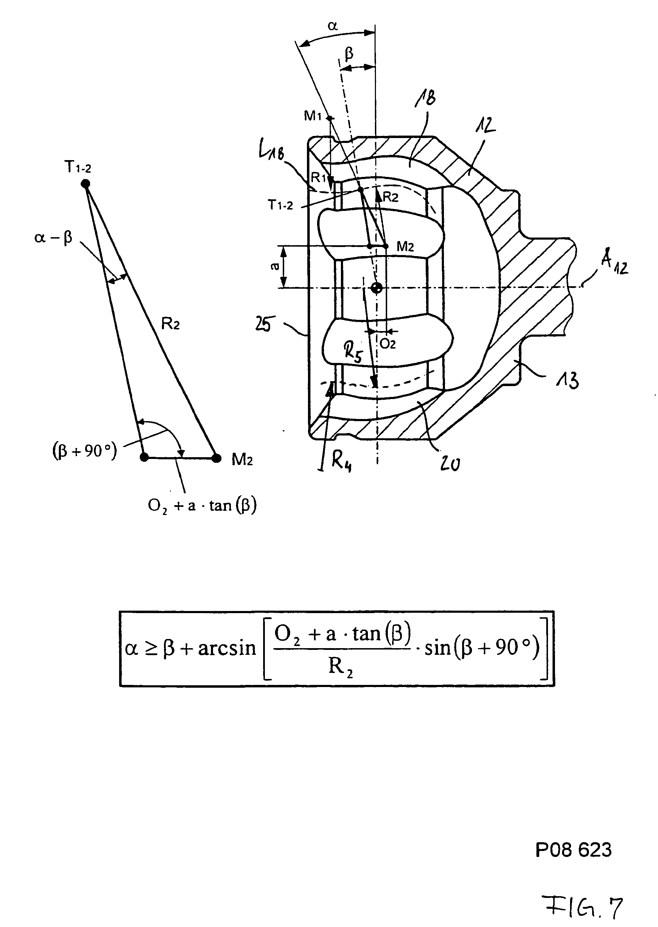

In Figur 7 ist das Verhältnis zwischen Lebensdauerwinkel bezogen auf den Kugelweg in der Bahn ($\beta$) und Wendepunktwinkel $\alpha$ für ein zweites mögliches Ausführungsbeispiel eines erfindungsgemäßen Gelenkaußenteils dargestellt. Im Bereich um die Gelenkmittelebene E hat die Mittellinie $L_{18}$ der Kugelbahn 18 hierbei einen geringeren Radius $R_2$ mit einem Mittelpunkt $M_2$, der gegenüber dem Gelenkmittelpunkt M um einen axialen Offset $O_2$ und um einen radialen Offset a versetzt ist. Über diesen Winkel ist die Tangente an den Wendepunkt $T_{1-2}$ definiert. Vom Wendepunkt aus setzt sich die Bahnmittellinie mit einem Radius $R_1$ um einen Mittelpunkt $M_1$ fort, der durch die Größe von $R_1$ und die Größe des Winkels $\alpha$ bestimmt ist. Zwischen dem um den Gelenkmittelpunkt M angetragenen Lebensdauerwinkel $\beta$ und dem Wendepunktwinkel $\alpha$ ergibt sich die Beziehung

$$\alpha \geq \beta + \arcsin\left[\frac{O_2 + a \cdot \tan(\beta)}{R_2} \cdot \sin(\beta + 90°)\right]$$

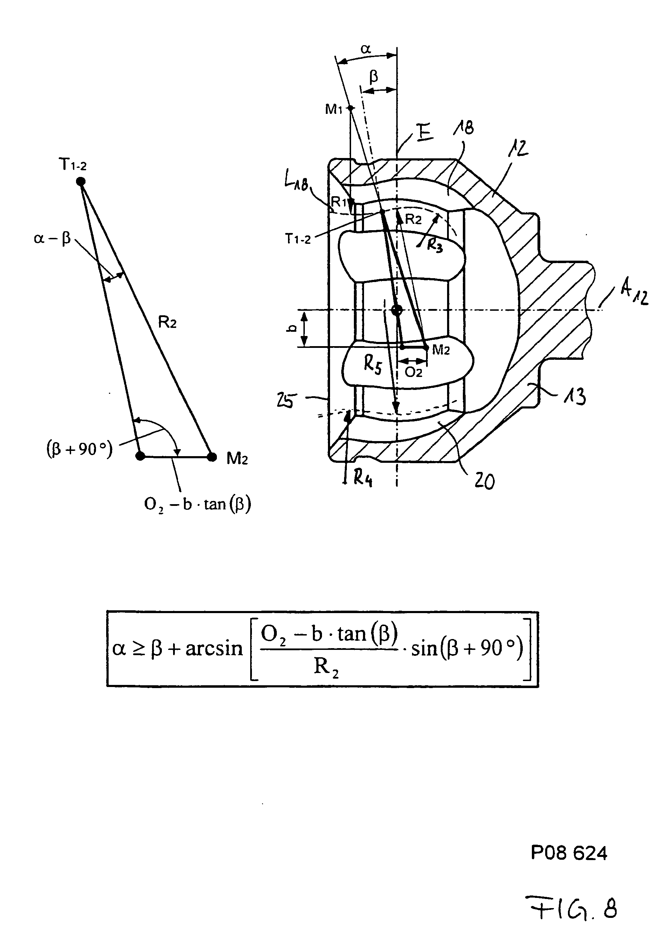

In Figur 8 ist das Verhältnis zwischen Lebensdauerwinkel bezogen auf den Kugelweg in der Bahn ($\beta$) und Wendepunktwinkel $\alpha$ für ein drittes mögliches Ausführungsbeispiel eines erfindungsgemäßen Gelenkaußenteils dargestellt. Im Bereich um die Gelenkmittelebene E hat die Mittellinie $L_{18}$ der Kugelbahn 18 hierbei einen geringeren Radius $R_2$ mit einem Mittelpunkt $M_2$, der gegenüber dem Gelenkmittelpunkt M um einen axialen Offset $O_2$ und um einen radialen Offset b versetzt ist. Über diesen Winkel ist die Tangente an den Wendepunkt $T_{1-2}$ definiert. Vom Wendepunkt aus setzt sich die Bahnmittellinie mit einem Radius $R_1$ um einen Mittelpunkt $M_1$ fort, der durch die Größe von $R_1$ und die Größe des Winkels $\alpha$ bestimmt ist. Zwischen dem um den Gelenkmittelpunkt M angetragenen Lebensdauerwinkel $\beta$ und dem Wendepunktwinkel $\alpha$ ergibt sich die Beziehung

$$\alpha \geq \beta + \arcsin\left[\frac{O_2 - b \cdot \tan(\beta)}{R_2} \cdot \sin(\beta + 90°)\right].$$

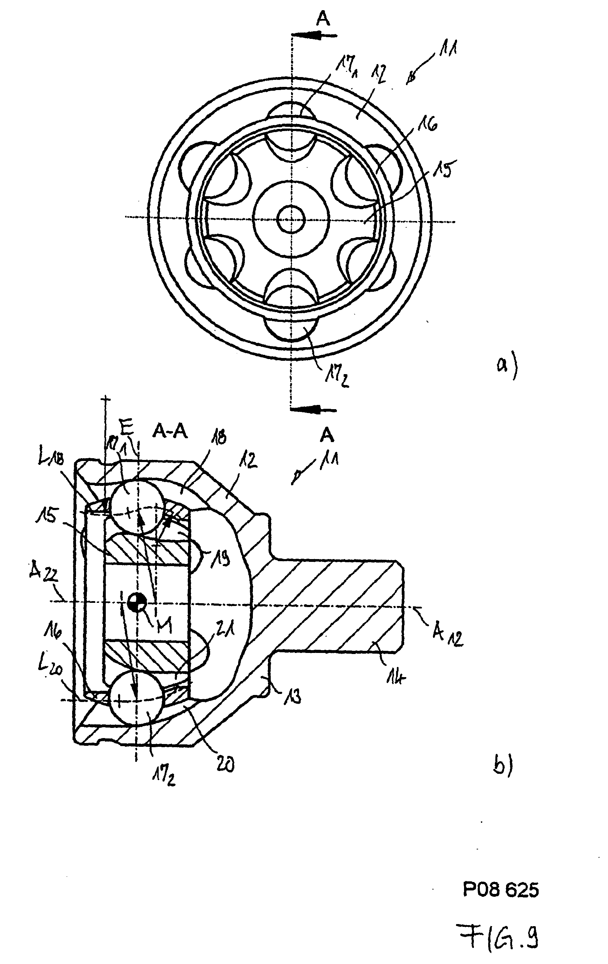

In Figur 9 ist ein 6-Kugel-Gelenk dargestellt, bei dem sich der Verlauf der Mittellinien $L_{18}$ der äußeren Kugelbahnen 18 aus drei Radien $R_1$, $R_2$, $R_3$ zusammensetzt, wobei sich die Radien $R_1$, $R_2$ über einen Wendepunkt aneinander anschließen, während der Verlauf der Mittellinien $L_{20}$ der zweiten äußeren Kugelbahnen 20 durch einen Radius $R_5$ mit anschließender achsparalleler Gerade definiert ist.

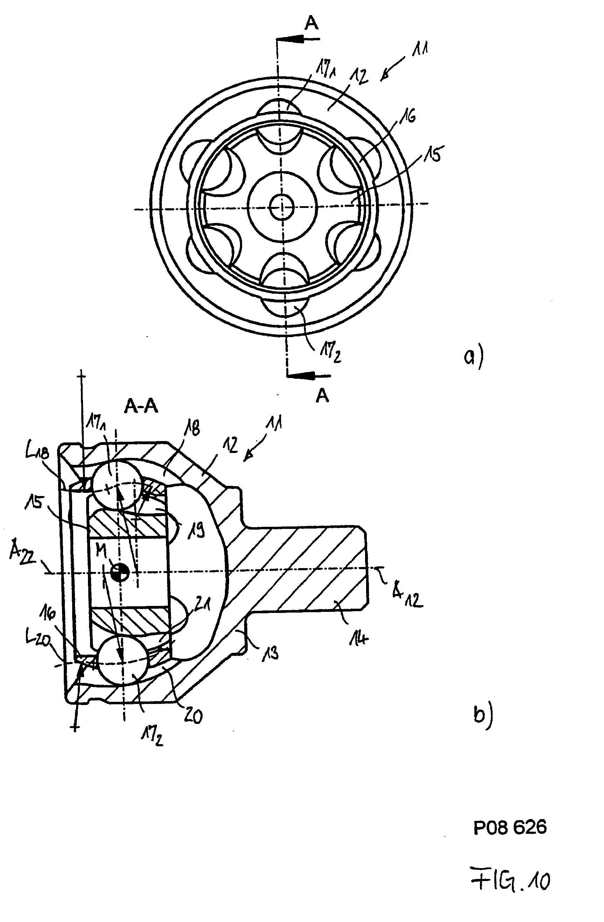

In Figur 10 ist ein 6-Kugel-Gelenk gezeigt, bei dem sich der Verlauf der Mittellinien $L_{18}$ der ersten äußeren Kugelbahnen 18 durch drei Radien $R_1$, $R_2$, $R_3$ definiert, wobei sich die Radien $R_1$, $R_2$ über einen Wendepunkt aneinander anschließen, während die Mittellinien $L_{20}$ der zweiten äußeren Kugelbahnen 20 über zwei Radien $R_4$, $R_5$ definiert ist, die sich über einen Wendepunkt aneinander anschließen.

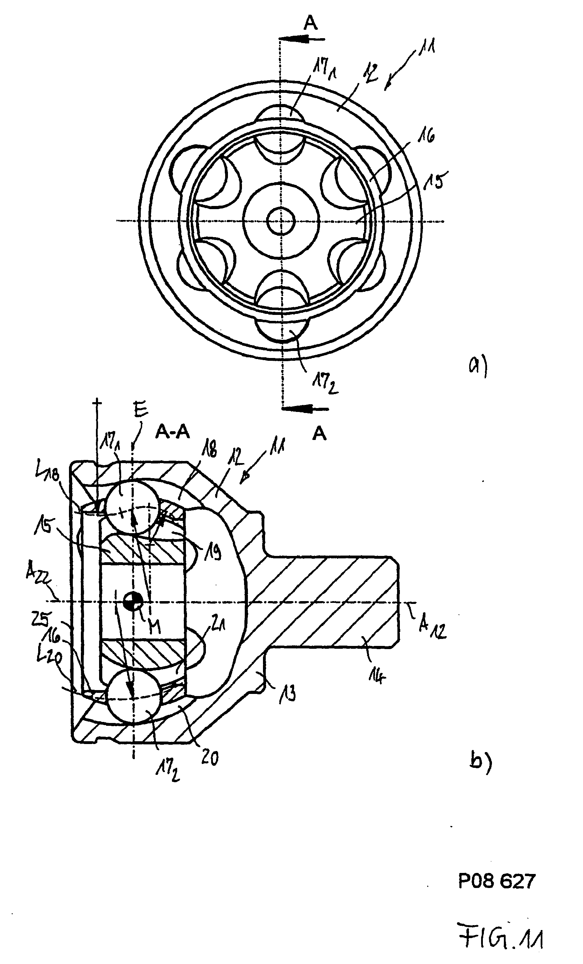

In Figur 11 ist ein 6-Kugel-Gelenk dargestellt, bei dem sich der Verlauf der Mittellinien $L_{18}$ der äußeren Kugelbahnen 18 aus drei Radien $R_1$, $R_2$, $R_3$ zusammensetzt, wobei sich die Radien $R_1$, $R_2$ über einen Wendepunkt aneinander anschließen, während der Verlauf der Mittellinien $L_{20}$ der zweiten äußeren Kugelbahnen 20 durch einen einheitlichen Radius $R_5$ definiert. Die zweiten Bahnen sind damit nach Art von Bahnen von RF-Gelenken gestaltet.

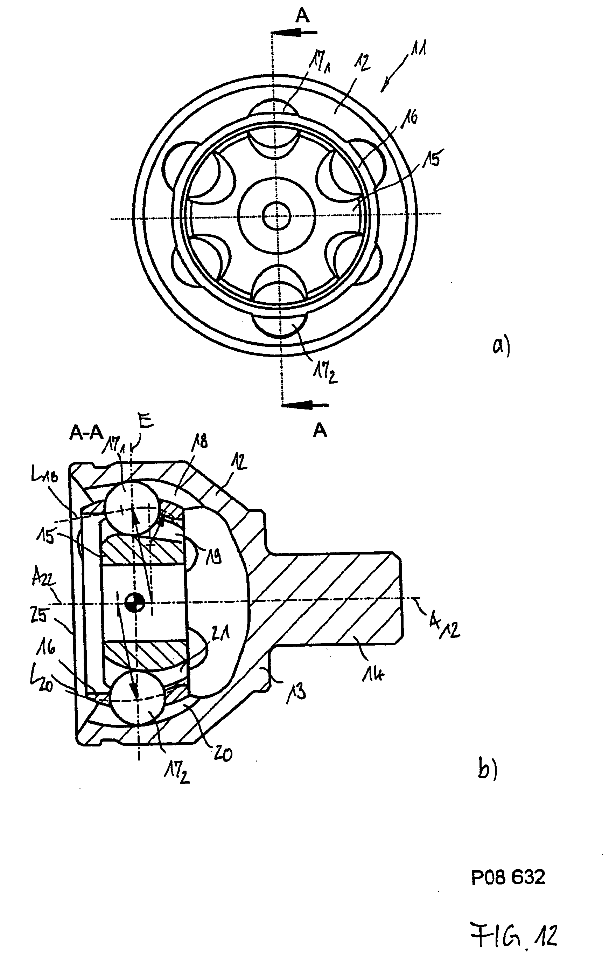

In Figur 12 ist ein 6-Kugel-Gelenk dargestellt, bei dem sich der Verlauf der Mittellinien $L_{18}$ der äußeren Kugelbahnen 18 aus zwei Radien $R_2$, $R_3$ und einer an den Radius $R_2$ in Richtung zur Öffnung tangential anschließenden Geraden zusammensetzt, während der Verlauf der Mittellinien $L_{20}$ der zweiten äußeren Kugelbahnen 20 durch einen einheitlichen Radius $R_5$ definiert ist.

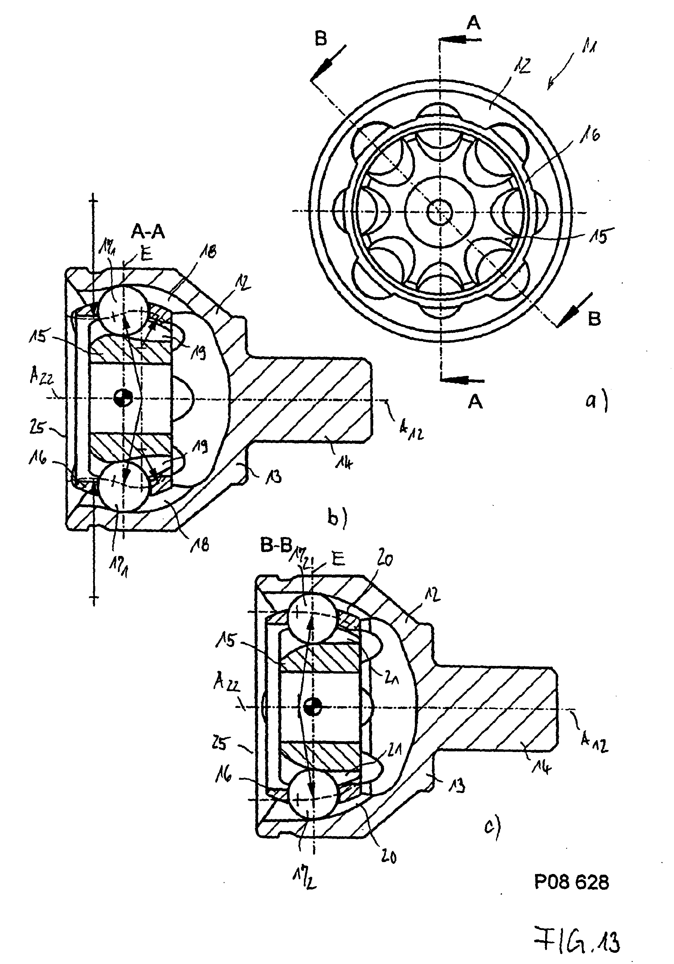

In Figur 13 ist ein 8-Kugel-Gelenk gezeigt, bei dem sich der Verlauf der Mittellinien $L_{18}$ der äußeren Kugelbahnen 18 aus drei Radien $R_1$, $R_2$, $R_3$ zusammensetzt, wobei sich die Radien $R_1$, $R_2$ über einen Wendepunkt aneinander anschließen, während der Verlauf der Mittellinien $L_{20}$ der zweiten äußeren Kugelbahnen 20 durch einen Radius $R_5$ mit anschließender achsparalleler Gerade definiert ist.

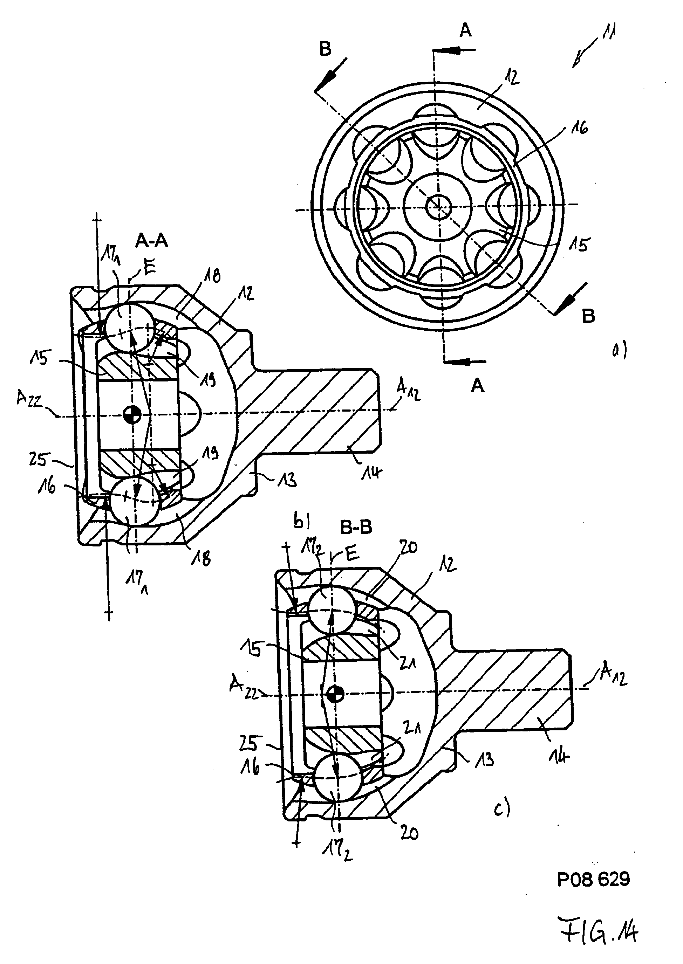

Figur 14 ist ein 8-Kugel-Gelenk gezeigt, bei dem sich der Verlauf der Mittellinien $L_{18}$ der ersten äußeren Kugelbahnen 18 durch drei Radien $R_1$, $R_2$, $R_3$ definiert, wobei sich die Radien $R_1$, $R_2$ über einen Wendepunkt aneinander anschließen, während die Mittellinien $L_{20}$ der zweiten äußeren Kugelbahnen 20 über zwei Radien $R_4$, $R_5$ definiert ist, die sich über einen Wendepunkt aneinander anschließen.

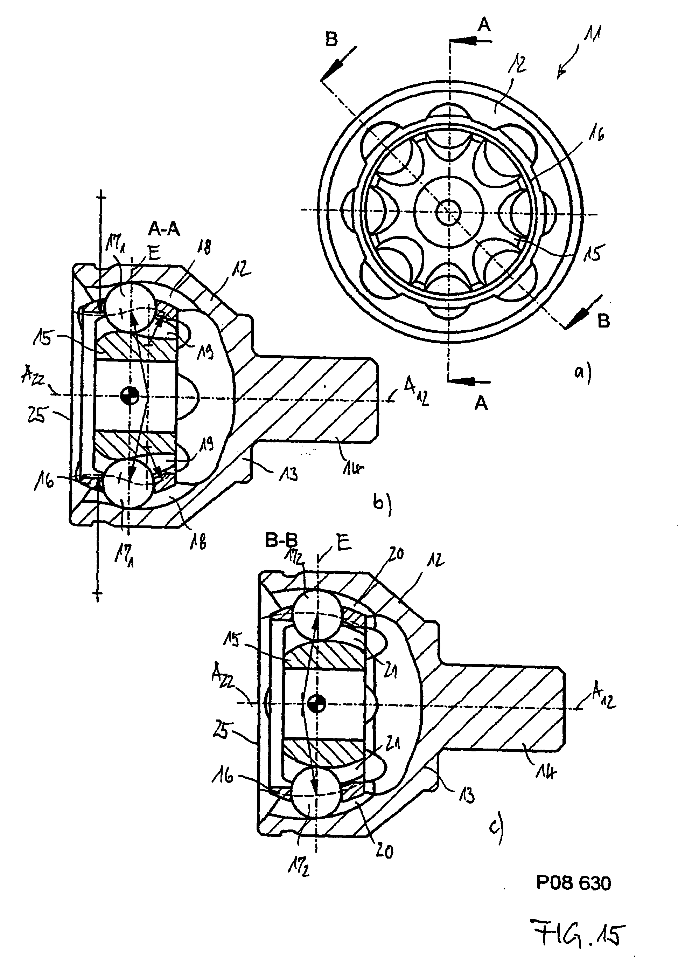

Figur 15 ist ein 8-Kugel-Gelenk dargestellt, bei dem sich der Verlauf der Mittellinien $L_{18}$ der äußeren Kugelbahnen 18 aus drei Radien $R_1$. $R_2$, $R_3$ zusammensetzt, wobei sich die Radien $R_1$, $R_2$ über einen Wendepunkt aneinander anschließen, während der Verlauf der Mittellinien $L_{20}$ der zweiten äußeren Kugelbahnen 20 durch einen einheitlichen Radius $R_5$ definiert. Die zweiten Bahnen sind damit nach Art der Bahnen von RF-Gelenken gestaltet.

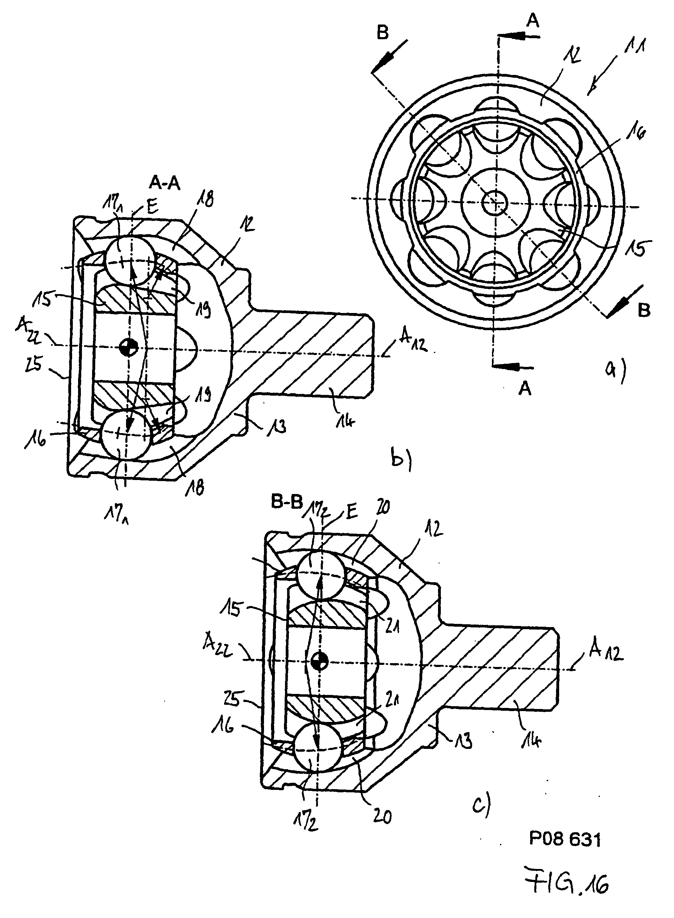

In Figur 16 ist ein 8-Kugel-Gelenk dargestellt, bei dem sich der Verlauf der Mittellinie der äußeren Kugelbahnen 18 aus zwei Radien $R_2$, $R_3$ und einer an den Radius $R_2$ in Richtung zur Öffnung tangential anschließenden Geraden zusammensetzt, während der Verlauf der Mittellinien $L_{20}$ der zweiten äußeren Kugelbahnen 20 durch einen einheitlichen

Radius $R_5$ definiert ist.

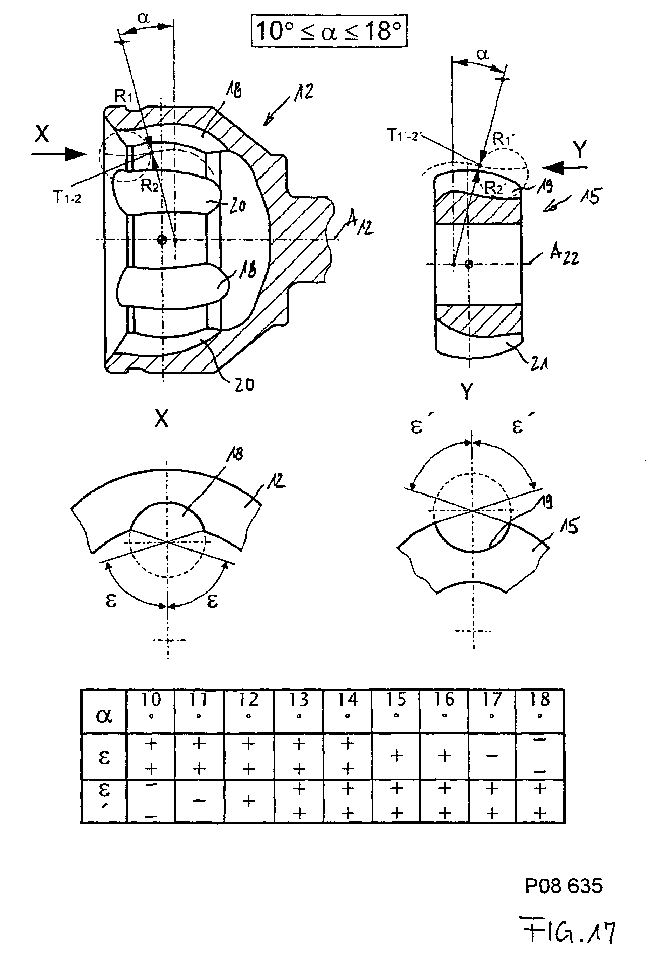

In Figur 17 ist die Bahnform der ersten äußeren Kugelbahnen und der ersten inneren Kugelbahnen für ein 6-Kugel-Gegenbahngelenk gemäß Figur 1 im einzelnen gezeigt, wobei die Mittellnie $L_{18}$ der ersten äußeren Kugelbahn 18 sich aus zwei Radien $R_1$, $R_2$ zusammensetzt, wie bereits zuvor beschrieben, und die der Mittellinie $L_{19}$ der inneren Kugelbahn 19 aus zwei bezüglich des Gelenkmittelpunkts M dazu symmetrischen Radien $R_{1'}$, $R_{2'}$. Zusätzlich ist das Verhältnis zwischen Wendepunktwinkel $\alpha$ und Bahnumschlingungswinkel $\varepsilon$ für die Bahn 18 im Gelenkaußenteil und für den Bahnumschlingungswinkel $\varepsilon'$ für die Bahn 19 im Gelenkinnenteil tabellarisch dargestellt. Hieraus ergibt sich, daß $\alpha$ > = 10° und < = 18° sein muß, um zufriedenstellende Umschlingungswinkel $\varepsilon$, $\varepsilon'$ zu garantieren.

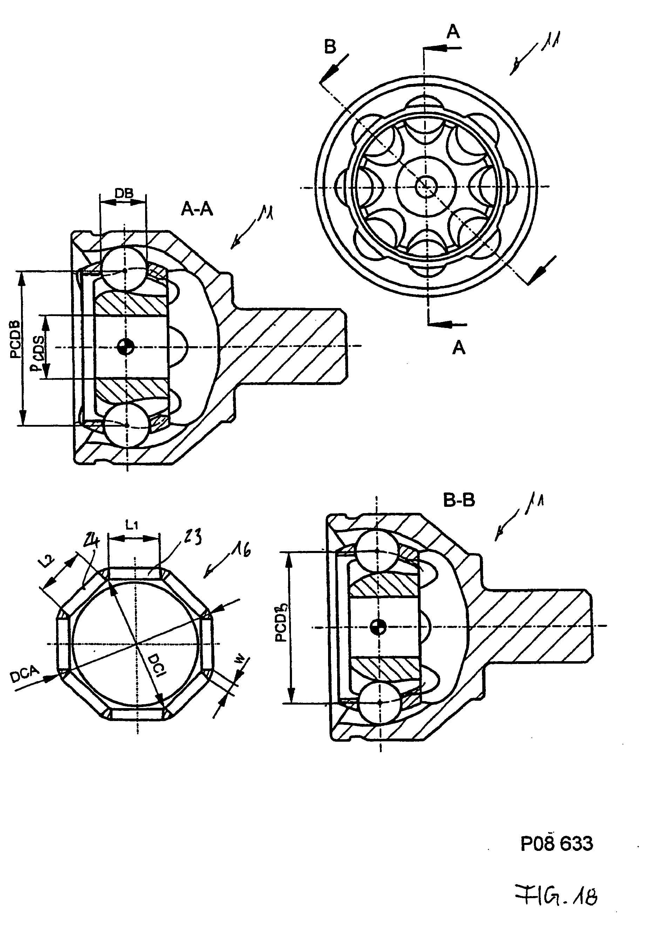

In Figur 18 ist ein 8-Kugel-Gelenk gezeigt, das mit dem in Figur 13 gezeigten übereinstimmt, wobei der Kugelkäfig 16 als Einzelheit im Querschnitt zusätzlich gezeigt ist. Hierbei ist erkennbar, daß die Kugelfenster 23 für die ersten Kugeln $17_1$ eine geringere Umfangslänge $L_1$ haben, als die Kugelfenster 24 für die zweiten Kugeln $17_2$, die eine größere Umfangslänge $L_2$ haben. Der äußere Käfigdurchmesser ist mit DCA bezeichnet, der innere Käfigdurchmesser mit DCI, jeweils bezogen auf Mittelebene E, in der der Kugelkäfig geschnitten ist. Die Umfangsbreite der Käfigstege ist außen mit W bezeichnet. Der Teilkreisradius der Kugeln im Gelenk hat die Bezeichnung PCDB, während die Einstecköffnung für die Welle im Gelenkinnenteil einen Durchmesser von PCDS hat. Dieser Durchmesser PCDS ist für den Fall, daß die Verbindung zwischen Gelenkinnenteil 15 und Welle (22) über eine Wellenverzahnung hergestellt wird, gleich dem mittleren Verzahnungsdurchmesser der Wellenverzahnung im Gelenkinnenteil.

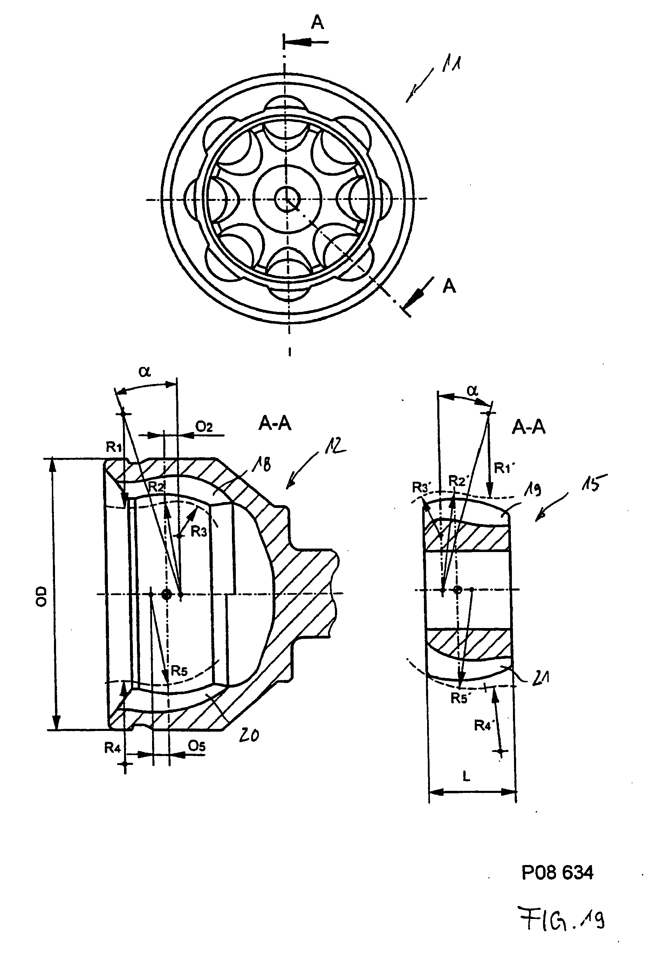

In Figur 19 ist für ein Gelenk mit acht Kugeln der Aufbau der Bahnmittellinien am Gelenkaußenteil und am Gelenkinnenteil gesondert aufgebaut. Die ersten äußeren Bahnen 18 sind aus den drei bereits erwähnten Radien $R_1$, $R_2$, $R_3$ zusammengesetzt, während die Bahnmittellinie der ersten inneren Kugelbahn aus drei gleich großen symmetrisch dazu positionierten Radien $R_{1'}$, $R_{2'}$, $R_{3'}$ zusammengesetzt sind. Für die zweiten äußeren Kugelbahnen gilt die Zusammensetzung aus den Radien $R_4$ und $R_5$, während die entsprechenden zweiten inneren Kugelbahnen 21 bezogen auf den Gelenkmittelpunkt M dazu symmetrisch angeordnete Radien $R_{4'}$, $R_{5'}$ aufweisen. Der größte Außendurchmesser des Gelenkaußenteils ist mit OD bezeichnet, die axiale Länge des Gelenkinnenteils mit L.

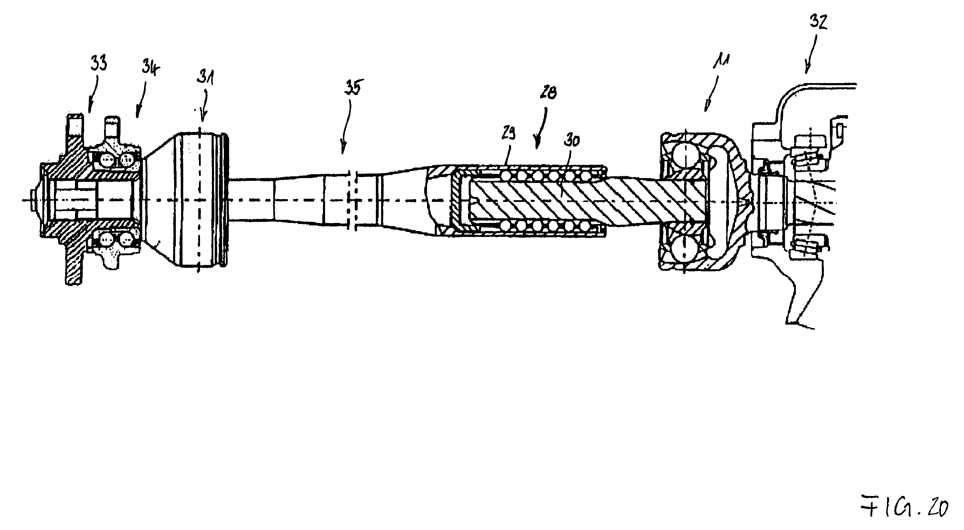

In Figur 20 ist eine Gelenkwelle in einer Einbausituation als Seitenwelle in einem Kraftfahrzeug dargestellt. Es ist eine erfindungsgemäße Gelenkwelle dargestellt, die ein erfindungsgemäßes Gleichlaufgelenk 11 als Monoblockgelenk aufweist, weiterhin eine Zwischenwelle 35 und ein zweites Gleichlaufgelenk 31, das ebenfalls ein erfindungsgemäßes Gelenk sein kann, insbesondere baugleich mit dem Gelenk 11. Die Zwischenwelle 35 umfaßt eine Axialverschiebeeinheit 28, die als wesentliche Bestandteile eine Hülse 29, einen Zapfen 30 sowie zwischen beiden wirksame nicht im einzelnen bezeichnete drehmomentübertragende Kugeln umfaßt und die einen Längenausgleich der Gelenkwelle zwischen den Gleichlaufgelenken 11, 31 zuläßt. Der Wellenzapfen des erfindungsgemäßen Gelenks 11 ist in ein Differentialgetriebe 32 eingesteckt und in diesem festgelegt, während der Wellenzapfen des zweiten Festgelenks 31 in eine Radnabenanordnung 33 mit einer Radlagerung 34 eingesteckt ist.

Bezugszeichenliste

11    Gleichlaufgelenk

12    Gelenkaußenteil

13    Boden

14    Zapfen

15    Gelenkinnenteil

16    Kugelkäfig

17    Kugel

18    erste Außenbahn

19    erste Innenbahn

20    zweite Außenbahn

21   zweite Innenbahn

22   Welle

23   Käfigfenster

24   Käfigfenster

25   Gelenköffnung

max   Maximaler Gelenkbeugewinkel
B   Lebensdauerwinkel
Δ   Öffnungswinkel
A   Wendepunktwinkel
$T_{1-2}$   Wendepunkt
L   Mittellinie
A   Längsachse
R   Radius
E   Mittelebene
M   Gelenkmittelpunkt
O   Axialoffset
A   Radialoffset
B   Radialoffset

**Patentansprüche**

1.   Gleichlaufgelenk (11) in Form eines Gegenbahngelenks mit den Merkmalen
    ein Gelenkaußenteil (12), welches eine erste Längsachse ($A_{12}$) und axial zueinander entgegengesetzt eine Anschlußseite und eine Öffnungsseite hat, und das erste äußere Kugelbahnen (18) und zweite äußere Kugelbahnen (20) aufweist,
    ein Gelenkinnenteil (15), welches eine zweite Längsachse ($A_{22}$) und Anschlußmittel für eine zur Öffnungsseite des Gelenkaußenteils (12) weisende Welle (22) hat und das erste innere Kugelbahnen (19) und zweite innere Kugelbahnen (21) aufweist,
    die ersten äußeren Kugelbahnen (18) und die ersten inneren Kugelbahnen (19) bilden erste Bahnpaare miteinander, die zweiten äußeren Kugelbahnen (20) und die zweiten inneren Kugelbahnen (21) bilden zweite Bahnpaare miteinander, die Bahnpaare nehmen jeweils eine drehmomentübertragende Kugel ($17_1$, $17_2$) auf,
    ein Kugelkäfig (16) sitzt zwischen Gelenkaußenteil (12) und Gelenkinnenteil (15) und weist umfangsverteilte Käfig-fenster ($24_1$, $24_2$) auf, die jeweils zumindest eine der Kugeln ($17_1$, $17_2$) aufnehmen,
    der Öffnungswinkel ($\delta_1$) der ersten Bahnpaare öffnet sich bei gestrecktem Gelenk in der Gelenkmittelebene (E) von der Öffnungsseite zur Anschlußseite des Gelenkaußenteils (12),
    der Öffnungswinkel ($\delta_2$) der zweiten Bahnpaare öffnet sich bei gestrecktem Gelenk in der Gelenkmittelebene (E) von der Anschlußseite zur Öffnungsseite des Gelenkaußenteils (12),
    **dadurch gekennzeichnet, dass**
    die Bahnmittellinien ($L_{18}$, $L_{19}$) der ersten Bahnpaare jeweils einen Wendepunkt ($T_{1-2}$) haben und der Mittelpunkts-winkel (β) an den Wendepunkt ($T_{1-2}$) bezogen auf die Gelenkmittelebene (E) jeweils größer als 4° ist, und dass die Bahnmittellinien ($L_{18}$, $L_{19}$) der ersten Bahnpaare von der Gelenkmittelebene (E) bis zum Wendepunkt ($T_{1-2}$) jeweils einen Radius ($R_2$) mit einem Mittelpunkt ($M_2$) aufweisen, wobei der Mittelpunkt ($M_2$) gegenüber dem Ge-lenkmittelpunkt (M) um einen axialen Offset ($O_2$) und einen radialen Abstand (a, b) versetzt ist.

2.   Gleichlaufgelenk nach Anspruch 1,
    **dadurch gekennzeichnet,**
    **daß** der Mittelpunktswinkel (β) an den Wendepunkt ($T_{1-2}$) bezogen auf die Gelenkmittelebene (E) jeweils größer als 5° ist.

3.   Gelenk nach Anspruch 1,
    **dadurch gekennzeichnet,**
    **daß** der Mittelpunktswinkel (β) an den Wendepunkt ($T_{1-2}$) bezogen auf die Gelenkmittelebene (E) jeweils kleiner als 12° ist.

4. Gleichlaufgelenk nach einem der Ansprüche 1 bis 3,
**dadurch gekennzeichnet,**
**daß** eine Tangente an die Bahnmittellinien ($L_{18}$, $L_{19}$) der ersten Bahnpaare im Wendepunkt ($T_{1-2}$) mit der jeweiligen Längsachse ($A_{12}$, $A_{22}$), bzw. eine Senkrechte auf dieser Tangente mit der Gelenkmittelebene (E), einen Wendepunktwinkel ($\alpha$) bildet, der jeweils größer oder gleich 10° ist und der jeweils kleiner oder gleich 23° ist, das heißt $10° \leq \alpha \leq 17°$.

5. Gleichlaufgelenk nach Anspruch 4,
**dadurch gekennzeichnet,**
**daß** der Wendepunktwinkel ($\alpha$) mit

$$\alpha \geq \beta + \arcsin\left[\frac{O_2}{R_2} \cdot \sin(\beta + 90°)\right]$$

definiert ist, wobei $O_2$ der axiale Abstand des Schnittpunkts einer Senkrechten auf der Tangente mit der jeweiligen Längsachse ($A_{12}$, $A_{22}$) von der Gelenkmittelebene (E), und ($R_2$) der Abstand dieses Schnittpunktes vom Wendepunkt ($T_{1-2}$) ist.

6. Gleichlaufgelenk nach einem der Ansprüche 1 bis 5,
**dadurch gekennzeichnet,**
**daß** der Mittelpunkt ($M_2$) von der jeweiligen Längsachse ($A_{12}$, $A_{22}$) in Richtung zum Wendepunkt ($T_{1-2}$) oder vom Wendepunkt ($T_{1-2}$) weg versetzt angeordnet ist.

7. Gleichlaufgelenk einem der Ansprüche 1 bis 6,
**dadurch gekennzeichnet,**
**daß** der Wendepunktwinkel ($\alpha$) mit

$$\alpha \geq \beta + \arcsin\left[\frac{O_2 + a \cdot \tan(\beta)}{R_2} \cdot \sin(\beta + 90°)\right]$$

definiert ist, wenn der Mittelpunkt ($M_2$) des Radius ($R_2$) von der jeweiligen Längsachse ($A_{12}$, $A_{22}$) den radialen Abstand (a) in Richtung zum Wendepunkt ($T_{1-2}$) hat.

8. Gleichlaufgelenk nach einem der Ansprüche 1 bis 6, **dadurch gekennzeichnet,**
**daß** der Wendepunktwinkel ($\alpha$) mit

$$\alpha \geq \beta + \arcsin\left[\frac{O_2 - b \cdot \tan(\beta)}{R_2} \cdot \sin(\beta + 90°)\right]$$

definiert ist, wenn der Mittelpunkt ($M_2$) des Radius ($R_2$) von der jeweiligen Längsachse ($A_{12}$, $A_{22}$) den radialen Abstand (b) in Richtung vom Wendepunkt ($T_{1-2}$) weg hat.

9. Gleichlaufgelenk nach einem der Ansprüche 1 bis 8,
**dadurch gekennzeichnet,**
**daß** die Bahnmittellinien ($L_{18}$, $L_{19}$) jeweils aus einem Radius ($R_2$) und vom Wendepunkt ($T_{1-2}$) ab aus einem Gegenradius ($R_1$) zusammengesetzt sind.

**10.** Gleichlaufgelenk nach einem der Ansprüche 1 bis 8,
**dadurch gekennzeichnet,**
**daß** die Bahnmittellinien ($L_{18}$, $L_{19}$) aus dem Radius ($R_2$) und vom Wendepunkt ($T_{1-2}$) aus einem Gegenradius ($R_1$) sowie einem sich auf der Gegenseite an den Radius ($R_2$) anschließenden kleineren Radius ($R_3$) mit gleichem Krümmungssinn zusammensetzt.

**11.** Gleichlaufgelenk nach einem der Ansprüche 1 bis 10,
**dadurch gekennzeichnet,**
**daß** die Bahnmittellinien ($L_{20}$, $L_{21}$) der zweiten Kugelbahnen sich aus einem Radius ($R_5$) und einer zur Öffnungsseite sich anschließenden achsparallelen Geraden zusammensetzen.

**12.** Gleichlaufgelenk nach einem der Ansprüche 1 bis 10,
**dadurch gekennzeichnet,**
**daß** die Bahnmittellinien ($L_{20}$, $L_{21}$) der zweiten Kugelbahnen sich aus einem Radius ($R_5$) und einem sich zur Öffungsseite anschließenden Gegenradius ($R_4$) zusammensetzen.

**13.** Gleichlaufgelenk nach einem der Ansprüche 1 bis 10,
**dadurch gekennzeichnet,**
**daß** die Bahnmittellinien ($L_{20}$, $L_{21}$) der zweiten Kugelbahnen aus einem Radius ($R_5$) gebildet werden.

**14.** Gelenkwelle umfassend zwei Gleichlaufgelenke und eine Zwischenwelle,
**dadurch gekennzeichnet,**
**daß** zumindest eines der Gleichlaufgelenke (11, 31) gemäß einem der Ansprüche 1 bis 13 ausgebildet ist.

**Claims**

**1.** A constant velocity joint (11) in the form of a counter track joint with the following characteristics:

an outer joint part (12) which comprises a first longitudinal axis ($A_{12}$), and an attaching end and an aperture end which are axially opposed relative to one another, and which outer joint part (12) further comprises first outer ball tracks (18) and second outer ball tracks (20);
an inner joint part (15) which comprises a second longitudinal axis ($A_{22}$), and attaching means for a shaft (22) pointing to the aperture end of the outer joint part (12), and which inner joint part (15) further comprises first inner ball tracks (19) and second inner ball tracks (21);
the first outer ball tracks (18) and the first inner ball tracks (19) form first pairs of tracks;
the second outer ball tracks (20) and the second inner ball tracks (21) form second pairs of tracks with one another and the pairs of tracks each accommodate a torque transmitting ball ($17_1$, $17_2$);
a ball cage (16) positioned between the outer joint part (12) and the inner joint part (15) and comprises circumferentially distributed cage windows ($24_1$, $24_2$) which each accommodate at least one of the balls ($17_1$, $17_2$);
when the joint is in the aligned condition, the aperture angle ($\delta_1$) of the first pairs of tracks opens in the central joint plane (E) from the aperture end to the attaching end of the outer joint part (12);
when the joint is in the aligned condition, the aperture angle ($\delta_2$) of the second pairs of tracks opens in the central joint plane (E) from the attaching end to the aperture end of the outer joint part (12),
**characterised in that**
the central track lines ($L_{18}$, $L_{19}$) of the first pairs of tracks each have a turning point ($T_{1-2}$) and wherein the centre angle ($\beta$) at the turning point ($T_{1-2}$), with reference to the central joint plane (E), is greater than 4°, and
that the central track lines ($L_{18}$, $L_{19}$) of the first pairs of tracks, from the central joint plane (E) to the turning point ($T_{1-2}$), each have a radius ($R_2$) with a centre ($M_2$), wherein the centre ($M_2$) is offset relative to the joint centre (M) by an axial offset (O2) and a radial offset (a, b).

**2.** A constant velocity joint according to claim 1,
**characterised**
**in that** the centre angle ($\beta$) at the turning point ($T_{1-2}$), with reference to the central joint plane (E), is greater than 5°.

**3.** A joint according to claim 1,
**characterised**
**in that** the centre angle ($\beta$) at the turning point ($T_{1-2}$), with reference to the central joint plane (E), is smaller than 12°.

**4.** A constant velocity joint according to any one of claims 1 to 3,
**characterised**
**in that** a tangent at the central track lines ($L_{18}$, $L_{19}$) of the first pairs of tracks in the turning point ($T_{1-2}$), together with the respective longitudinal axis ($A_{12}$, $A_{22}$) and, respectively, a perpendicular line on said tangent, together with the central joint plane (E), form a turning point angle ($\alpha$) each of which is greater than or equal to 10°, and each of which is smaller than or equal to 17°, i.e. $10° \leq \alpha \leq 17°$.

**5.** A constant velocity joint according to claim 4,
**characterised**
**in that** the turning point angle ($\alpha$) is defined by

$$\alpha \geq \beta + \arcsin\left[\frac{O_2}{R_2} \cdot \sin(\beta + 90°)\right]$$

wherein ($O_2$) is the axial distance of the point of intersection of a perpendicular line on the tangent with the respective longitudinal axis ($A_{12}$, $A_{22}$) and ($R_2$) is the distance of said point of intersection from the turning point ($T_{1-2}$).

**6.** A constant velocity joint according to any one of claims 1 to 5,
**characterised**
**in that** the centre ($M_2$) is offset relative to the respective longitudinal axis ($A_{12}$, $A_{22}$) in direction towards the turning point ($T_{1-2}$), or away from the turning point ($T_{1-2}$).

**7.** A constant velocity joint according to any one of claims 1 to 6,
**characterised**
**in that** the turning point angle ($\alpha$) is defined by

$$\alpha \geq \beta + \arcsin\left[\frac{O_2 + a \cdot \tan(\beta)}{R_2} \cdot \sin(\beta + 90°)\right]$$

if the centre ($M_2$) of the radius ($R_2$), relative to the respective longitudinal axis ($A_{12}$, $A_{22}$), has the radial offset (a) towards the turning point ($T_{1-2}$).

**8.** A constant velocity joint according to any one of claims 1 to 6,
**characterised**
**in that** the turning point angle ($\alpha$) is defined by

$$\alpha \geq \beta + \arcsin\left[\frac{O_2 - b \cdot \tan(\beta)}{R_2} \cdot \sin(\beta + 90°)\right]$$

if if the centre ($M_2$) of the radius ($R_2$), relative to the respective longitudinal axis ($A_{12}$, $A_{22}$), has the radial offset (b) away from the turning point ($T_{1-2}$).

**9.** A constant velocity joint according to any one of claims 1 to 8,
**characterised**
**in that** the central track lines ($L_{18}$, $L_{19}$) are composed of the a first radius ($R_2$) and, from the turning point ($T_{1-2}$) onwards, a counter radius ($R_1$).

**10.** A constant velocity joint according to any one of claims 1 to 8,
**characterised**

**in that** the central track lines ($L_{18}$, $L_{19}$) are composed of the radius ($R_2$) and, from the turning point ($T_{1-2}$) onwards, a counter radius ($R_1$), and, following the radius ($R_2$) in opposite direction, a smaller radius ($R_3$) with the same sense of curvature.

11. A constant velocity joint according to any one of claims 1 to 10,
    **characterised**
    **in that** the central track lines ($L_{20}$, $L_{21}$) of the second ball tracks are composed of a radius ($R_5$) and an axis-parallel straight line which follows towards the aperture end.

12. A constant velocity joint according to any one of claims 1 to 10,
    **characterised**
    **in that** the central track lines ($L_{20}$, $L_{21}$) of the second ball tracks are composed of a radius ($R_5$) and a counter radius ($R_4$) which follows towards the aperture end.

13. A constant velocity joint according to any one of claims 1 to 10,
    **characterised**
    **in that** the central track lines ($L_{20}$, $L_{21}$) of the second ball tracks are formed by a radius ($R_5$).

14. A driveshaft comprising two constant velocity joints and an intermediate shaft,
    **characterised**
    **in that** at least one of the constant velocity joints (11, 31) is designed according to one of claims 1 to 13.

**Revendications**

1. Joint homocinétique (11) sous la forme d' un joint à chemins de roulement conjugués, pourvu des caractéristiques suivantes :

   une pièce de joint extérieure (12), ayant un premier axe longitudinal ($A_{12}$) et, axialement opposés entre eux, un côté de raccordement et un côté d'ouverture, et comportant de premiers chemins de roulement pour sphère extérieurs (18) et de deuxièmes chemins de roulement pour sphère extérieurs (20),
   une pièce de joint intérieure (15), ayant un deuxième axe longitudinal ($A_{22}$) et des moyens de raccordement pour un arbre (22) dirigé vers le côté d'ouverture de la pièce de joint extérieure (12), et comportant de premiers chemins de roulement pour sphère intérieurs (19) et de deuxièmes chemins de roulement pour sphère intérieurs (21),
   les premiers chemins de roulement pour sphère extérieurs (18) et les premiers chemins de roulement pour sphère intérieurs (19) forment ensemble de premières paires de chemins de roulement,
   les deuxièmes chemins de roulement pour sphère extérieurs (20) et les deuxièmes chemins de roulement pour sphère intérieurs (21) forment ensemble de deuxièmes paires de chemins de roulement, les paires de chemins de roulement reçoivent chacune une sphère ($17_1$, $17_2$) transmettrice de couple,
   une cage de sphère (16) est logée entre la pièce de joint extérieure (12) et la pièce de joint intérieure (15) et elle comporte des fenêtres de cage ($24_1$, $24_2$) réparties sur son contour, lesquelles reçoivent chacune au moins une des sphères ($17_1$, $17_2$),
   l'angle d'ouverture ($\delta_1$) des premières paires de chemins de roulement s'ouvre sur le plan de joint médian (E), depuis le côté d'ouverture vers le côté de raccordement de la pièce de joint extérieure (12) lorsque le joint est étiré,
   l'angle d'ouverture ($\delta_2$) des deuxièmes paires de chemin de roulement s'ouvre sur le plan de joint médian (E), du côté de raccordement au côté d'ouverture de la pièce de joint extérieure (12) lorsque le joint est étiré,
   **caractérisé en ce que** les lignes médianes de chemin ($L_{18}$, $L_{19}$) des premières paires de chemins de roulement présentent chacune un point d'inflexion ($T_{1-2}$) et l'angle au centre ($\beta$) sur le point d'inflexion ($T_{1-2}$) est respectivement supérieur à 4° par rapport au plan de joint médian (E), et **en ce que** les lignes médianes de chemin ($L_{18}$, $L_{19}$) des premières paires de chemins de roulement présentent chacune un rayon ($R_2$) avec un centre ($M_2$), du plan de joint médian (E) au point d'inflexion ($T_{1-2}$), le centre ($M_2$) étant décalé d'un décalage axial ($O_2$) et d'un espacement radial (a, b) par rapport au centre du joint (M).

2. Joint homocinétique selon la revendication 1,
   **caractérisé**
   **en ce que** l'angle au centre ($\beta$) sur le point d'inflexion ($T_{1-2}$) est respectivement supérieur 5° par rapport au plan de joint médian (E).

3. Joint selon la revendication 1,
**caractérisé**
**en ce que** l'angle au centre ($\beta$) sur le point d'inflexion ($T_{1-2}$) est respectivement inférieur à 12° par rapport au plan de joint médian (E).

4. Joint homocinétique selon l'une des revendications 1 à 3,
**caractérisé**
**en ce qu'**une tangente aux lignes médianes de chemin ($L_{18}$, $L_{19}$) des premières paires de chemins de roulement sur le point d'inflexion ($T_{1-2}$) forme avec l'axe longitudinal ($A_{12}$, $A_{22}$) respectivement, ou en ce qu'une perpendiculaire à ladite tangente forme avec le plan de joint médian (E) un angle au point d'inflexion ($\alpha$) respectivement supérieur ou égal à 10°, et respectivement inférieur ou égal à 17°, soit : $10° \leq \alpha \leq 17°$.

5. Joint homocinétique selon la revendication 4,
**caractérisé**
**en ce que** l'angle au point d'inflexion ($\alpha$) est défini par

$$\alpha \geq \beta + \arcsin\left[\frac{O_2}{R_2} \cdot \sin(\beta + 90°)\right]$$

où $O_2$ est l'espacement axial du point d'intersection d'une perpendiculaire à la tangente à l'axe longitudinal ($A_{12}$, $A_{22}$) respectif du plan de joint médian (E), et ($R_2$) est l'espacement dudit point d'intersection au point d'inflexion ($T_{1-2}$).

6. Joint homocinétique selon l'une des revendications 1 à 5,
**caractérisé**
**en ce que** le centre ($M_2$) de l'axe longitudinal ($A_{12}$, $A_{22}$) respectif est disposé avec un décalage dans la direction du point d'inflexion ($T_{1-2}$) ou dans la direction opposée au point d'inflexion ($T_{1-2}$).

7. Joint homocinétique selon l'une des revendications 1 à 6,
**caractérisé**
**en ce que** l'angle au point d'inflexion ($\alpha$) est défini par

$$\alpha \geq \beta + \arcsin\left[\frac{O_2 + a \cdot \tan(\beta)}{R_2} \cdot \sin(\beta + 90°)\right]$$

si le centre ($M_2$) du rayon ($R_2$) présente l'espacement radial (a) à l'axe longitudinal ($A_{12}$, $A_{22}$) dans la direction du point d'inflexion ($T_{1-2}$).

8. Joint homocinétique selon l'une des revendications 1 à 6,
**caractérisé**
**en ce que** l'angle au point d'inflexion ($\alpha$) est défini par

$$\alpha \geq \beta + \arcsin\left[\frac{O_2 - b \cdot \tan(\beta)}{R_2} \cdot \sin(\beta + 90°)\right]$$

si le centre ($M_2$) du rayon ($R_2$) présente l'espacement radial (b) à l'axe longitudinal ($A_{12}$, $A_{22}$) dans la direction opposée au point d'inflexion ($T_{1-2}$).

**9.** Joint homocinétique selon l'une des revendications 1 à 8,
**caractérisé**
**en ce que** les lignes médianes de chemin ($L_{18}$ $L_{19}$) sont composées chacune d'un rayon ($R_2$) et d'un rayon opposé ($R_1$) depuis le point d'inflexion ($T_{1-2}$).

**10.** Joint homocinétique selon l'une des revendications 1 à 8,
**caractérisé**
**en ce que** les lignes médianes de chemin ($L_{18}$, $L_{19}$) sont composées du rayon ($R_2$) et d'un rayon opposé ($R_1$) depuis le point d'inflexion ($T_{1-2}$), ainsi que d'un rayon inférieur ($R_3$) de même sens de courbure adjacent au rayon ($R_2$) sur le côté opposé.

**11.** Joint homocinétique selon l'une des revendications 1 à 10,
**caractérisé**
**en ce que** en ce que les lignes médianes de chemin ($L_{20}$, $L_{21}$) des deuxièmes chemins de roulement pour sphère se composent d'un rayon ($R_5$) et de droites axialement parallèles adjacentes au côté d'ouverture.

**12.** Joint homocinétique selon l'une des revendications 1 à 10,
**caractérisé**
**en ce que** les lignes médianes de chemin ($L_{20}$, $L_{21}$) des deuxièmes chemins de roulement pour sphère se composent d'un rayon ($R_5$) et d'un rayon opposé ($R_4$) adjacent au côté d'ouverture.

**13.** Joint homocinétique selon l'une des revendications 1 à 10,
**caractérisé**
**en ce que** les lignes médianes de chemin ($L_{20}$, $L_{21}$) des deuxièmes chemins de roulement pour sphère sont formées par un rayon ($R_5$).

**14.** Arbre de joint comprenant deux joints homocinétiques et un arbre intermédiaire,
**caractérisé**
**en ce qu'**au moins un des joints homocinétiques (11, 31) est réalisé selon l'une des revendications 1 à 13.

a)

b)

P08 617

FIG. 1

a)

b)

c)

P08 618

FIG. 2

a)

b)

c)

P08 619

FIG.3

a)

b)

c)

P08 620

FIG.4

$$10° \leq \alpha$$

$$\alpha \geq \beta + \arcsin\left[\frac{O_2}{R_2} \cdot \sin(\beta + 90°)\right]$$

FIG. 5

$$\boxed{\alpha \leq 17^\circ}$$

a)

b)

| $\alpha$ | 10° | 11° | 12° | 13° | 14° | 15° | 16° | 17° | 18° |
|---|---|---|---|---|---|---|---|---|---|
| $\varepsilon$ | ++ | ++ | ++ | ++ | ++ | + | + | – | -- |

P08 622

FIG.6

$$\alpha \geq \beta + \arcsin\left[\frac{O_2 + a \cdot \tan(\beta)}{R_2} \cdot \sin(\beta + 90°)\right]$$

P08 623

FIG. 7

24

$$\alpha \geq \beta + \arcsin \left[ \frac{O_2 - b \cdot \tan(\beta)}{R_2} \cdot \sin(\beta + 90°) \right]$$

P08 624

FIG. 8

a)

A-A

b)

P08 625

FIG.9

a)

b)

P08 626

FIG.10

a)

b)

P08 627

FIG.11

a)

b)

P08 632

FIG. 12

A-A

B-B

a)

b)

c)

P08 628

FIG. 13

a)

b) B-B

c)

A-A

P08 629

FIG. 14

a)

b)

c)

A-A

B-B

P08 630

FIG.15

P08 631

FIG. 16

$$10° \leq \alpha \leq 18°$$

X

Y

| α | 10° | 11° | 12° | 13° | 14° | 15° | 16° | 17° | 18° |
|---|---|---|---|---|---|---|---|---|---|
| ε | + + | + + | + + | + + | + + | + | + | − | − − |
| ε´ | − − | − | + | + + | + + | + + | + + | + + | + + |

P08 635

FIG.17

34

A-A

DB

PCDB

PCDS

B

A

A

B-B

L2

L1

24

23

16

DCA

DCI

w

PCDB

EP 2 239 477 B1

A

A

A-A

A-A

P08 634

FIG. 19

FIG. 20

**EP 2 239 477 B1**

**IN DER BESCHREIBUNG AUFGEFÜHRTE DOKUMENTE**

**In der Beschreibung aufgeführte Patentdokumente**

- DE 10220711 A1
- DE 10337612 A1
- DE 10060220 A1